(19) Europäisches Patentamt / European Patent Office / Office européen des brevets

(11) **EP 4 300 759 B1**

(12) **EUROPEAN PATENT SPECIFICATION**

(45) Date of publication and mention
of the grant of the patent:
**08.10.2025 Bulletin 2025/41**

(21) Application number: **22784963.5**

(22) Date of filing: **06.04.2022**

(51) International Patent Classification (IPC):
*H02J 7/00* (2006.01)

(52) Cooperative Patent Classification (CPC):
**H02J 7/0016; H02J 7/007184;** Y02E 60/10

(86) International application number:
**PCT/KR2022/004972**

(87) International publication number:
**WO 2022/216054 (13.10.2022 Gazette 2022/41)**

(54) **ELECTRONIC DEVICE FOR CHARGING PLURALITY OF BATTERIES**

ELEKTRONISCHE VORRICHTUNG ZUM LADEN MEHRERER BATTERIEN

DISPOSITIF ÉLECTRONIQUE POUR CHARGER UNE PLURALITÉ DE BATTERIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.04.2021 KR 20210046553**

(43) Date of publication of application:
**03.01.2024 Bulletin 2024/01**

(73) Proprietor: **Samsung Electronics Co., Ltd.
Suwon-si, Gyeonggi-do 16677 (KR)**

(72) Inventor: **CHOI, Hangseok
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(56) References cited:
WO-A1-2008/115538      KR-A- 20140 108 384
KR-A- 20140 108 384      KR-A- 20200 012 105
KR-B1- 102 225 270      US-A1- 2019 199 219
US-A1- 2020 036 198      US-A1- 2020 266 499

## Description

[Technical Field]

The disclosure relates to an electronic device for charging a plurality of batteries.

[Background Art]

When a voltage output from a power management circuit (e.g., charging circuit) to a battery is lower than a designated target voltage value, an electronic device may control the power management circuit to charge the battery with a constant current (CC). When an output voltage of the power management circuit reaches a target voltage value during CC charging, the electronic device may control the power management circuit to charge the battery with a constant voltage (CV).

The above information is presented as background information only to assist with an understanding of the disclosure. No determination has been made, and no assertion is made, as to whether any of the above might be applicable as prior art with regard to the disclosure.

US 2020/266499 AI discloses a method of controlling a plurality of batteries and an electronic device to which the method is applied. The electronic device includes a housing and a plurality of batteries. The electronic device also includes a power management module, a plurality of current limiting ICs, and a processor operationally connected to the plurality of batteries, the power management module and the plurality of current limiting ICs. The processor is configured to sense a sum of the currents flowing into the plurality of batteries or a voltage of the power management module, perform a primary end of reducing a magnitude of the sum of the currents flowing into the plurality of batteries, sense the currents or voltages of the plurality of batteries, and perform a secondary end of blocking a current flowing into a battery.

[Disclosure of Invention]

[Technical Problem]

The electronic device is a foldable electronic device and includes a foldable housing that can be folded or unfolded. For example, the foldable housing can be divided into two housings around a folding axis. Batteries can be disposed in each housing of the electronic device, and the batteries have different capacities. In this way, in the case that batteries are physically separated and/or cells have different capacities, cell balancing can be difficult during battery charging or discharging. For example, the resistance of a line (e.g., a flexible printed circuit board (FPCB)) connecting physically separated batteries can cause asymmetry in a charging current upon charging the battery, and the asymmetry in the charging current can cause deterioration in stability of the battery or deterioration in the lifespan of the battery.

Aspects of the disclosure are to address at least the above-mentioned problems and/or disadvantages and to provide at least the advantages described below. Accordingly, an aspect of the disclosure is to provide an electronic device capable of increasing battery stability and battery lifespan by reducing current asymmetry due to impedance asymmetry when physically separated batteries having different capacities are connected in parallel.

Additional aspects will be set forth in part in the description which follows and, in part, will be apparent from the description or may be learned by practice of the presented embodiments.

[Solution to Problem]

The present invention is defined by the appended set of claims. Preferred embodiments are defined by the dependent claims. In accordance with an aspect of the disclosure, an electronic device is provided. The electronic device includes a first battery, a second battery connected in parallel with the first battery, wherein the first battery and the second battery are branched at a first node, a charger configured to charge the first battery and the second battery using power input from an external device, a voltage detection circuit configured to detect a voltage of the first battery and a voltage of the second battery while the first battery and the second battery are being charged, and a balancing circuit disposed between the first node and the first battery and configured to control a connection between the first node and the first battery in a pulse width modulation (PWM) method based on detecting a difference between the voltage of the first battery and the voltage of the second battery.

In accordance with another aspect of the disclosure, a method of charging a first battery and a second battery by an electronic device is provided. The method includes detecting a voltage of the first battery and a voltage of the second battery through a voltage detection circuit while the first battery and the second battery are being charged, and controlling a connection between the first node and the first battery in a PWM method based on that a balancing circuit disposed between the first battery and a first node in which a connection between the first battery and the second battery is branched detects a difference between the voltage of the first battery and the voltage of the second battery.

[Advantageous Effects of Invention]

According to various embodiments of the disclosure, when physically separated batteries having different capacities are connected in parallel, the electronic device reduces the asymmetry of a charging current and a discharging current due to impedance asymmetry, thereby increasing stability of the battery and a lifespan of the battery.

Other aspects, advantages, and salient features of the disclosure will become apparent to those skilled in the art from the following detailed description, which, taken in conjunction with the annexed drawings, discloses various embodiments of the disclosure.

[Brief Description of Drawings]

The above and other aspects, features, and advantages of certain embodiments of the disclosure will be more apparent from the following description taken in conjunction with the accompanying drawings, in which:

FIG. 1 is a block diagram illustrating an electronic device in a network environment according to an embodiment of the disclosure;
FIG. 2 is a block diagram illustrating a power management module and a battery according to an embodiment of the disclosure;
FIG. 3 is a plan view illustrating a front surface of an electronic device in an unfolding state of an electronic device according to an embodiment of the disclosure;
FIG. 4 is a plan view illustrating a rear surface of an electronic device in an unfolding state according to an embodiment of the disclosure;
FIG. 5 is a perspective view illustrating a folding state of an electronic device according to an embodiment of the disclosure;
FIG. 6 is a perspective view illustrating an intermediate state of an electronic device according to an embodiment of the disclosure;
FIG. 7 is a schematic block diagram illustrating a disposition of main components of an electronic device according to an embodiment of the disclosure;
FIG. 8 is a block diagram illustrating a component constitution of an electronic device according to an embodiment of the disclosure;
FIG. 9 is a circuit diagram specifically illustrating a balancing circuit according to an embodiment of the disclosure;
FIG. 10 is a circuit diagram illustrating an operation of a balancing circuit in a case that a voltage of a first battery and a voltage of a second battery are the same when the first battery and the second battery are charged according to an embodiment of the disclosure;
FIG. 11A is a circuit diagram illustrating an operation of a balancing circuit in a case that a voltage of a first battery and a voltage of a second battery are different from each other when the first battery and the second battery are charged according to an embodiment of the disclosure;
FIG. 11B is a graph illustrating a change in charging current of a first battery according to an operation of a balancing circuit when the first battery and a second battery are charged according to an embodiment of the disclosure;
FIG. 12 is a graph illustrating a control signal for controlling a balancing circuit and a corresponding change in charging current when a first battery and a second battery are charged according to an embodiment of the disclosure;
FIG. 13 is a circuit diagram illustrating an operation of a balancing circuit in a case that a voltage of a first battery and a voltage of a second battery are the same when the first battery and the second battery are discharged according to an embodiment of the disclosure;
FIG. 14A is a circuit diagram illustrating an operation of a balancing circuit in a case that a voltage of a first battery and a voltage of a second battery are different from each other when the first battery and the second battery are discharged according to an embodiment of the disclosure;
FIG. 14B is a graph illustrating a change in input terminal current of a balancing circuit according to an operation of the balancing circuit when a first battery and a second battery are discharged according to an embodiment of the disclosure; and
FIG. 15 is a graph illustrating a control signal for controlling a balancing circuit and a corresponding change in discharge current when a first battery and a second battery are discharged according to an embodiment of the disclosure.

Throughout the drawings, it should be noted that reference numbers are used to depict the same or similar elements, features, and structures.

[Mode for the Invention]

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

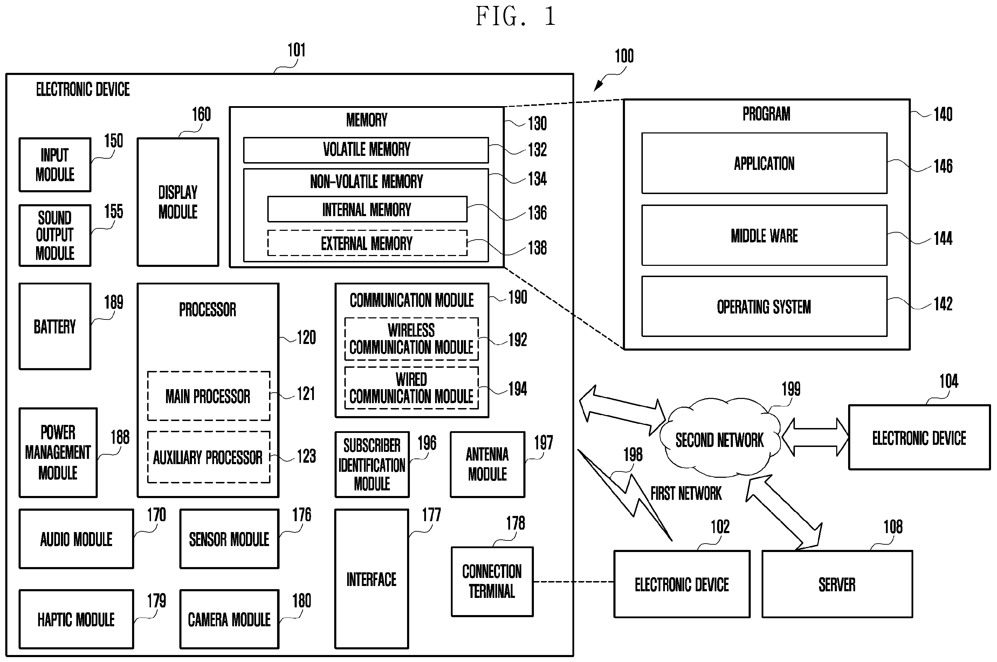

FIG. 1 is a block diagram illustrating an electronic device in a network environment according to an embodiment of the disclosure.

Referring to FIG. 1, an electronic device 101 in a network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment of the disclosure, the electronic device 101 may communicate with the external electronic device 104 via the server 108. According to an embodiment of the disclosure, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments of the disclosure, at least one of the components (e.g., the connecting terminal 178) may be omitted from the electronic device 101, or one or more other components may be added in the electronic device 101. In some embodiments of the disclosure, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment of the disclosure, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment of the disclosure, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment of the disclosure, the auxiliary processor 123 (e.g., an image signal processor or a communication processor) may be implemented as part of another component (e.g., the camera module 180 or the communication module 190) functionally related to the auxiliary processor 123. According to an embodiment of the disclosure, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment of the disclosure, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment of the disclosure, the display module 160 may include a touch sensor adapted to detect a touch, or a pressure sensor adapted to measure the intensity of force incurred by the touch.

The audio module 170 may convert a sound into an electrical signal and vice versa. According to an embodiment of the disclosure, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment of the disclosure, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment of the disclosure, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment of the disclosure, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment of the disclosure, the haptic module 179 may include, for example, a motor, a piezoelectric element, or an electric stimulator.

The camera module 180 may capture a still image or moving images. According to an embodiment of the disclosure, the camera module 180 may include one or more lenses, image sensors, image signal processors, or flashes.

The power management module 188 may manage power supplied to the electronic device 101. According to one embodiment of the disclosure, the power management module 188 may be implemented as at least part of, for example, a power management integrated circuit (PMIC).

The battery 189 may supply power to at least one component of the electronic device 101. According to an embodiment of the disclosure, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment of the disclosure, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment of the disclosure, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment of the disclosure, the antenna module 197 may include an antenna including a radiating element including a conductive material or a conductive pattern formed in or on a substrate (e.g., a printed circuit board (PCB)). According to an embodiment of the disclosure, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment of the disclosure, another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment of the disclosure, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment of the disclosure, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment of the disclosure, the external electronic device 104 may include an internet-of-things (IoT) device. The server 108 may be an intelligent server using machine learning and/or a neural network. According to an embodiment of the disclosure, the external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as a memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

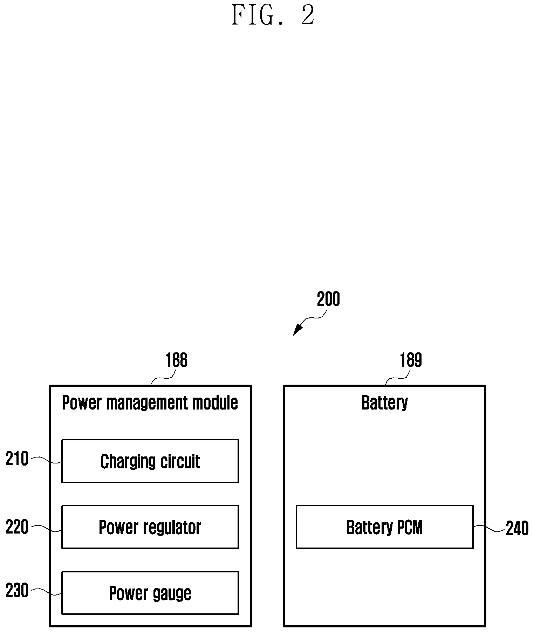

FIG. 2 is a block diagram 200 illustrating a power management module and a battery according to an embodiment of the disclosure.

Referring to FIG. 2, the power management module 188 may include a charging circuit 210, a power regulator 220, or a power gauge 230. The charging circuit 210 may charge the battery 189 using power supplied from an external power source for the electronic device 101. According to an embodiment of the disclosure, the charging circuit 210 may select a charging method (e.g., normal charging or rapid charging) based on at least some of a type of an external power source (e.g., power adapter, USB, or wireless charging), a magnitude (e.g., about 20 watts or more) of power capable of being supplied from the external power source, or an attribute of the battery 189, and charge the battery 189 using the selected charging method. The external power source may be, for example, connected to the electronic device 101 by wire through the connection terminal 178 or wirelessly through the antenna module 197.

The power regulator 220 may generate, for example, a plurality of powers having different voltages or current levels by adjusting a voltage level or a current level of power supplied from an external power source or the battery 189. The power regulator 220 may adjust power of the battery 189 or the external power source to a voltage or current level appropriate for each of some of the components included in the electronic device 101. According to an embodiment of the disclosure, the power regulator 220 may be implemented in the form of a low drop out (LDO) regulator or a switching regulator. The power gauge 230 may measure use state information of the battery 189 (e.g., a capacity, the number of charge/discharge, a voltage, or a temperature of the battery 189).

The power management module 188 may determine charging state information (e.g., lifespan, overvoltage, undervoltage, overcurrent, overcharge, overdischarge, overheating, short circuit, or swelling) related to charging of the battery 189 based at least in part on the measured use state information using, for example, the charging circuit 210, the power regulator 220, or the power gauge 230. The power management module 188 may determine whether the battery 189 is normal or abnormal based at least in part on the determined charge state information. In the case that the state of the battery 189 is determined to be abnormal, the power management module 188 may adjust charging of the battery 189 (e.g., reduce charging current or voltage, or stop charging). According to an embodiment of the disclosure, at least some of the functions of the power management module 188 may be performed by an external control device (e.g., the processor 120).

According to an embodiment of the disclosure, the battery 189 may include a battery protection circuit module (PCM) 240. The battery PCM 240 may perform one or more of various functions (e.g., pre-blocking function) for preventing performance deterioration or damage of the battery 189. Additionally or alternatively, the battery PCM 240 may be constituted as at least a part of a battery management system (BMS) capable of performing various functions including cell balancing, measuring a capacity of a battery, measuring the number of charge/discharge times, measuring a temperature, or measuring a voltage.

According to an embodiment of the disclosure, at least a portion of the use state information or the charge state information of the battery 189 may be measured using a corresponding sensor (e.g., temperature sensor) of the sensor module 176, the power gauge 230, or the power management module 188. According to an embodiment of the disclosure, the corresponding sensor (e.g., temperature sensor) of the sensor module 176 may be included as part of the battery PCM 240 or disposed near the battery 189 as a separate device.

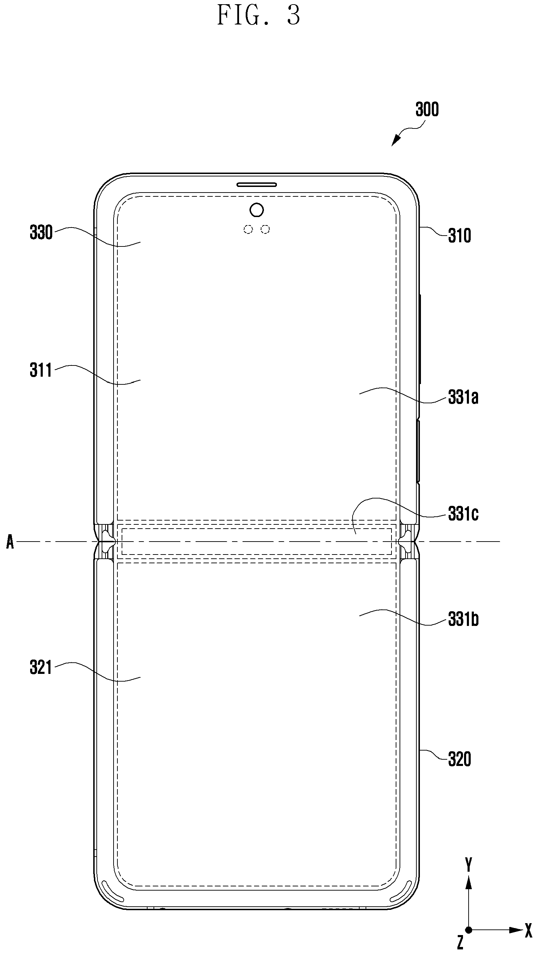

FIG. 3 is a plan view illustrating a front surface of an electronic device in an unfolding state of the electronic device according to an embodiment of the disclosure.

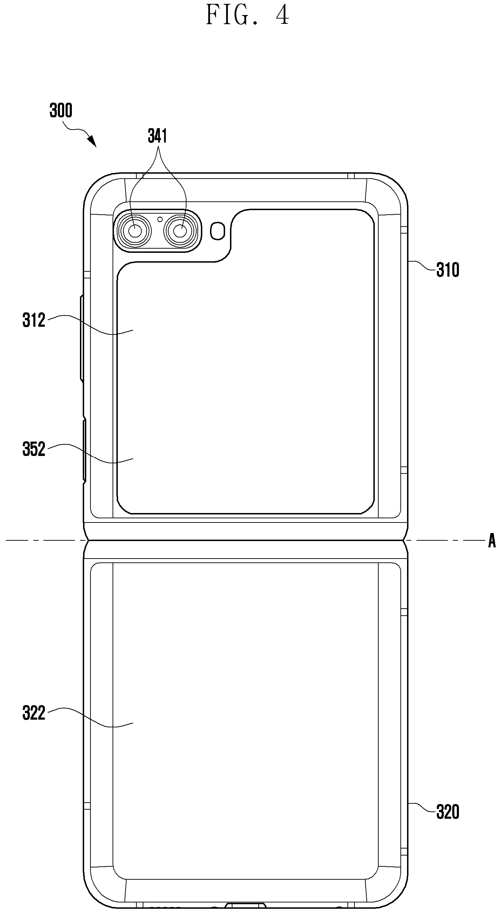

FIG. 4 is a plan view illustrating a rear surface of an electronic device in an unfolding state according to an embodiment of the disclosure.

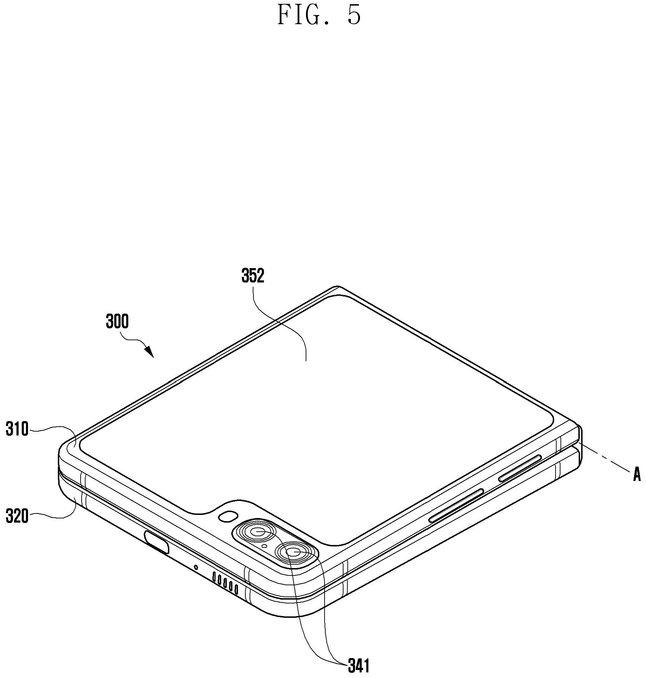

FIG. 5 is a perspective view illustrating a folding state of an electronic device according to an embodiment of the disclosure.

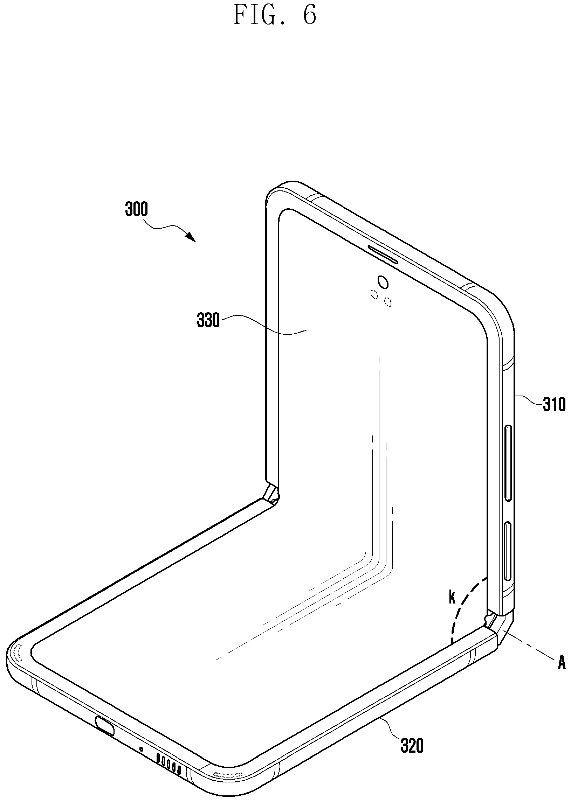

FIG. 6 is a perspective view illustrating an intermediate state of an electronic device according to an embodiment of the disclosure.

Referring to FIGS. 3, 4, 5, and 6, an electronic device 300 according to various embodiments may include a first housing 310 and a second housing 320 rotatably coupled to each other based on a folding area, a first display 330 visually exposed through a first surface 311 of the first housing 310 and a third surface 321 of the second housing 320, and/or a second display 352 (e.g., sub display) visually exposed through a second surface 312 of the first housing 310.

According to an embodiment of the disclosure, the first housing 310 may include a first surface 311 facing a first direction in an unfolding state of the electronic device 300 as a surface in which the first display 330 (e.g., main display) is disposed, and a second surface 312 facing a second direction opposite to the first direction.

According to an embodiment of the disclosure, the second housing 320 may include a third surface 321 disposed parallel to the first surface 311 when the electronic device 300 is in an unfolding state as a surface in which the first display 330 is disposed, and a fourth surface 322 opposite to the third surface 321. According to an embodiment of the disclosure, in an unfolding state of the electronic device 300, the third surface 321 may be disposed to face the first direction, and the fourth surface 322 may be disposed to face the second direction.

According to various embodiments of the disclosure, the electronic device 300 may be an in-folding type foldable electronic device 300 or an out-folding type foldable electronic device 300. For example, in the case that the electronic device 300 is an in-folding type foldable electronic device 300, as the first surface 311 and the third surface 321 are disposed to face each other in a folding state of the electronic device 300, the first display 330 may not be visually exposed from the outside. For example, in the case that the electronic device 300 is an out-folding type foldable electronic device 300, as the second surface 312 and the fourth surface 322 are disposed to face each other in a folding state of the electronic device 300, the first display 330 may be visually exposed from the outside. In the following description, it is described that the electronic device 300 is an in-folding type foldable electronic device 300, but various embodiments of this document may not be limited to the described example.

According to an embodiment of the disclosure, a hinge module (not illustrated) may be disposed in the folding area of the electronic device 300. According to an embodiment of the disclosure, the hinge module (not illustrated) is disposed to be coupled to one side of the first housing 310 and one side of the second housing 320. Thus, the first housing 310 and the second housing 320 may rotate with respect to each other. According to an embodiment of the disclosure, the hinge module (not illustrated) may form a folding axis (e.g., axis A) in which the electronic device 300 is folded. For example, in the folding state of the electronic device 300, the first surface 311 of the first housing 310 and the third surface 321 of the second housing 320 may be disposed to face each other, and in an unfolding state of the electronic device 300, the first surface 311 of the first housing 310 and the third surface 321 of the second housing 320 may be disposed parallel to each other with a folding axis (e.g., axis A) interposed therebetween.

According to an embodiment of the disclosure, the first display 330 may be a flexible display. According to an embodiment of the disclosure, the first display 330 may be disposed at the first surface 311 of the first housing 310 and the third surface 321 of the second housing 320. For example, the first display 330 may be disposed to extend from the first surface 311 to the third surface 321, and substantially form the first surface 311 and the third surface 321 of the electronic device 300. According to an embodiment of the disclosure, the first display 330 may include a first area 331a disposed at the first surface 311, a second area 331b disposed at the third surface 321, and a third area 331c disposed to correspond to a folding area. According to an embodiment of the disclosure, the third area 331c may be disposed between the first area 331a and the second area 331b.

According to an embodiment of the disclosure, the second display 352 may serve as, for example, a sub display. According to an embodiment of the disclosure, when the first display 330 is in a folding state that is not visually exposed from the outside, the second display may display a user interface or a designated notification instead of the first display 330.

According to various embodiments of the disclosure, the electronic device 300 may include at least one camera module 341 (e.g., the camera module of FIG. 1). According to an embodiment of the disclosure, the at least one camera module 341 may be disposed at the second surface 312 of the first housing 310. According to various embodiments of the disclosure, in the electronic device 300, the at least one camera module 341 may be disposed at not only the second surface 312, but also the third surface 321 or the first surface 311 in which the first display 330 is disposed. According to some embodiments of the disclosure, in the case that the camera module (e.g., the camera module of FIG. 1) is disposed at the third surface 321 or the first surface 311 in which the first display 330 is disposed, the camera module (e.g., the camera module of FIG. 1) may be disposed in the form of an under-display camera.

According to various embodiments of the disclosure, an intermediate state of the electronic device 300 may represent an intermediate state between a folding state and an unfolding state, as illustrated in FIG. 6. For example, the intermediate state may mean a free stop state in which the first housing 310 and the second housing 320 have a specific angle (e.g., angle k) between 0 degrees and 180 degrees.

According to various embodiments of the disclosure, a folding axis (e.g., axis A) of the electronic device 300 may be disposed to cross the first display 330 in a horizontal direction (e.g., x direction of FIG. 3) or to cross the first display 330 in a vertical direction (e.g., the y direction of FIG. 3). For example, according to the examples illustrated in FIGS. 3 to 6, the folding axis (e.g., axis A) of the electronic device 300 is disposed to cross the first display 330 in a horizontal direction (e.g., x direction of FIG. 3), but various embodiments of this document are not limited to the illustrated example, and the folding axis (e.g., axis A) of the electronic device 300 may be disposed to cross the first display 330 in a vertical direction (e.g., y direction of FIG. 3).

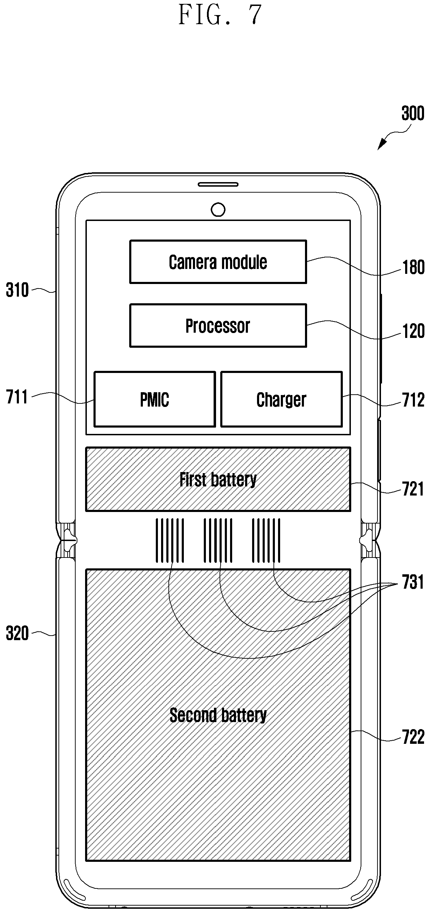

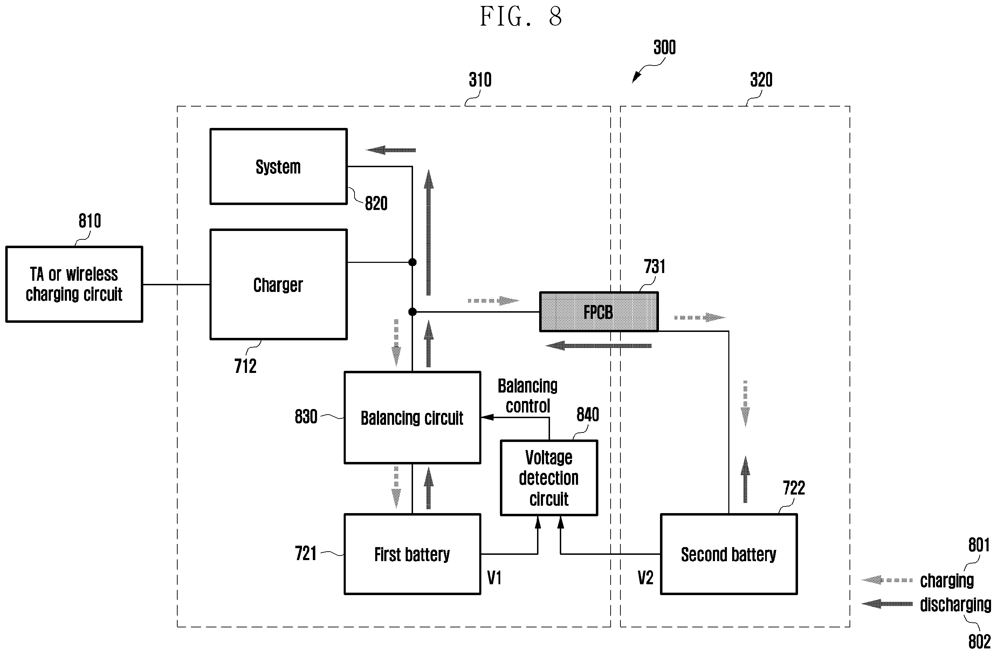

An electronic device (e.g., the electronic device 101 of FIG. 1) according to various embodiments may include a first battery (e.g., a first battery 721 of FIG. 7), a second battery (e.g., a second battery 722 of FIG. 7) connected in parallel with the first battery 721, wherein the first battery 721 and the second battery 722 are branched at a first node (e.g., a first node n1 of FIG. 8), a charger (e.g., a charger 712 of FIG. 7) configured to charge the first battery 721 and the second battery 722 using power input from an external device, a voltage detection circuit (e.g., a voltage detection circuit 840 of FIG. 8) configured to detect a voltage of the first battery 721 and a voltage of the second battery 722 while the first battery 721 and the second battery 722 are being charged, and a balancing circuit (e.g., a balancing circuit 830 of FIG. 8) disposed between the first node n1 and the first battery 721 and configured to control a connection between the first node n1 and the first battery 721 in a PWM manner based on detecting a difference between the voltage of the first battery 721 and the voltage of the second battery 722.

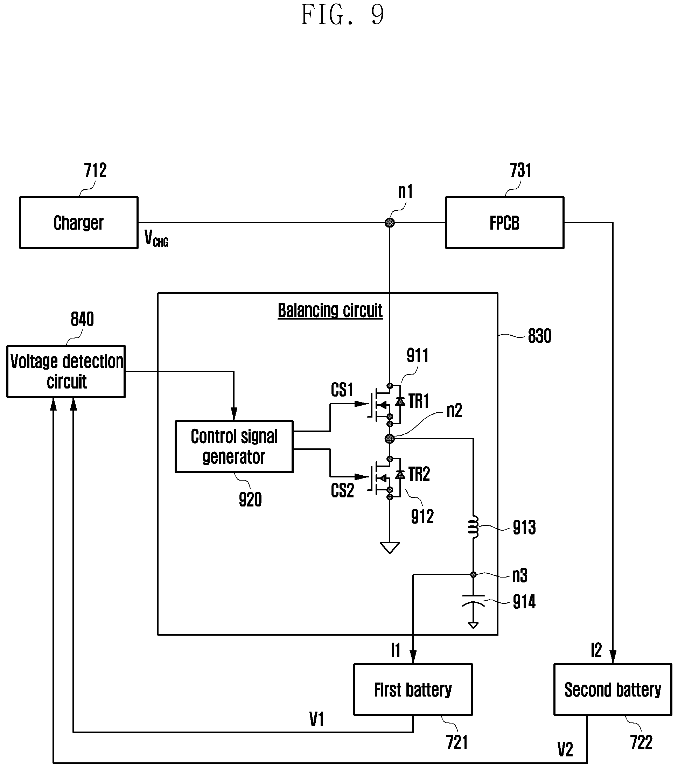

According to an embodiment of the disclosure, the balancing circuit 830 may include a first transistor (e.g., a first transistor 911 of FIG. 9) and second transistor (e.g., a second transistor 912 of FIG. 9) connected in series between the first node n1 and the ground, and an inductor (e.g., an inductor 913 of FIG. 9) branched from a second node (e.g., a second node n2 of FIG. 9) disposed between the first transistor and the second transistor 912, and one end of the inductor 913 may be connected to the second node n2 and the other end of the inductor 913 may be connected to the first battery 721.

According to an embodiment of the disclosure, the balancing circuit 830 may further include a control signal generator (e.g., a control signal generator 920 of FIG. 9) configured to generate a first control signal CS1 for controlling the first transistor 911 and a second control signal CS2 for controlling the second transistor 912 based on the voltage of the first battery 721 and the voltage of the second battery 722.

According to an embodiment of the disclosure, while the first battery 721 and the second battery 722 are being charged, when the voltage of the first battery 721 and the voltage of the second battery 722 are the same, the balancing circuit 830 may control the first transistor 911 to continuously turn on and the second transistor 912 to continuously turn off.

According to an embodiment of the disclosure, while the first battery 721 and the second battery 722 are being charged, when the voltage of the first battery 721 is higher than that of the second battery 722, the balancing circuit 830 may control the first transistor 911 to switch based on a designated duty cycle smaller than 100%, and the second transistor 912 to switch opposite to the first transistor 911.

According to an embodiment of the disclosure, the second battery 722 may be connected to the charger 712 through a flexible printed circuit board (FPCB), and the first battery 721 may be connected to the charger 712 without going through the FPCB.

According to an embodiment of the disclosure, while the first transistor 911 switches based on a designated duty cycle smaller than 100% and the second transistor 912 switches opposite to the first transistor 911, a first charging current supplied to the first battery 721 may be defined by a designated equation (e.g., Equation 4), and a second charging current supplied to the second battery 722 may be defined by a designated equation (e.g., Equation 5).

According to an embodiment of the disclosure, while the first battery 721 and the second battery 722 are being discharged, when the voltage of the first battery 721 and the voltage of the second battery 722 are the same, the balancing circuit 830 may control the first transistor 911 to continuously turn on and the second transistor 912 to continuously turn off.

According to an embodiment of the disclosure, while the first battery 721 and the second battery 722 are being discharged, when the voltage of the first battery 721 is lower than that of the second battery 722, the balancing circuit 830 may control the first transistor 911 to switch based on a designated duty cycle smaller than 100% and control the second transistor 912 to continuously turn off.

According to an embodiment of the disclosure, the second battery 722 may be connected to the charger 712 through the FPCB, and the first battery 721 may be directly connected to the charger 712.

According to an embodiment of the disclosure, while the first transistor 911 switches based on a designated duty cycle smaller than 100% and the second transistor 912 is continuously turned off, a first discharge current discharged from the first battery 721 may be defined by a designated equation (e.g., Equation 9), and a second discharge current discharged from the second battery 722 may be defined by a designated equation (e.g., Equation 10).

According to an embodiment of the disclosure, the electronic device may further include a first housing and a second housing rotatably coupled to each other using a hinge module, and the charger 712 and the first battery 721 may be disposed in the first housing, and the second battery 722 may be disposed in the second housing.

According to an embodiment of the disclosure, the second battery 722 may be connected to the charger 712 by the FPCB disposed to cross the hinge module between the first housing and the second housing.

A method of charging the first battery 721 and a second battery 722 by an electronic device 101 according to various embodiments may include detecting a voltage of the first battery 721 and a voltage of the second battery 722 through a voltage detection circuit 840 while the first battery 721 and the second battery 722 are being charged, and controlling a connection between a first node n1 and the first battery 721 in a PWM method based on that a balancing circuit 830 disposed between the first battery 721 and the first node n1 in which a connection of the first battery 721 and the second battery 722 is branched detects a difference between the voltage of the first battery 721 and the voltage of the second battery 722.

According to an embodiment of the disclosure, the balancing circuit 830 may include a first transistor 911 and second transistor 912 connected in series between the first node n1 and the ground, and the inductor 913 branched from a second node n2 disposed between the first transistor and the second transistor 912, and one end of the inductor 913 may be connected to the second node n2 and the other end of the inductor 913 may be connected to the first battery 721.

According to an embodiment of the disclosure, the balancing circuit 830 may generate a first control signal CS1 for controlling the first transistor 911 and a second control signal CS2 for controlling the second transistor 912 based on the voltage of the first battery 721 and the voltage of the second battery 722.

According to an embodiment of the disclosure, while the first battery 721 and the second battery 722 are being charged, when the voltage of the first battery 721 and the voltage of the second battery 722 are the same, the balancing circuit 830 may control the first transistor 911 to continuously turn on and the second transistor 912 to continuously turn off.

According to an embodiment of the disclosure, while the first battery 721 and the second battery 722 are being charged, when the voltage of the first battery 721 is higher than that of the second battery 722, the balancing circuit 830 may control the first transistor 911 to switch based on a designated duty cycle smaller than 100%, and control the second transistor 912 to switch opposite to the first transistor 911.

According to an embodiment of the disclosure, the second battery 722 may be connected to the charger 712 through the FPCB, and the first battery 721 may be connected to the charger 712 without going through the FPCB.

According to an embodiment of the disclosure, while the first transistor 911 switches based on a designated duty cycle smaller than 100% and the second transistor 912 switches opposite to the first transistor 911, a first charging current supplied to the first battery 721 may be defined by a designated equation (e.g., Equation 4), and a second charging current supplied to the second battery 722 may be defined by a designated equation (e.g., Equation 5).

FIG. 7 is a schematic block diagram illustrating a disposition of main components of an electronic device according to an embodiment of the disclosure.

The electronic device 300 illustrated in FIG. 7 may include components at least partially similar to or different from the electronic device 300 illustrated in FIG. 1 or the electronic device 300 illustrated in FIGS. 3 to 6. Hereinafter, only non-described or changed components will be described with reference to FIG. 7.

Referring to FIG. 7, the electronic device 300 according to various embodiments may be a foldable electronic device 300, as illustrated in FIGS. 3 to 6. For example, the electronic device 300 may include a first housing 310 and a second housing 320 rotatably coupled to each other.

According to an embodiment of the disclosure, in the first housing 310, the processor 120 (e.g., the processor 120 of FIG. 1), a camera module 180 (e.g., the camera module 180 of FIG. 1), a PMIC 711 (e.g., the power management module 188 of FIG. 2), a charger 712 (e.g., the charging circuit 210 of FIG. 2), and/or the first battery 721 (e.g., the battery 189 of FIG. 1) may be disposed.

According to an embodiment of the disclosure, a second battery 722 (e.g., the battery 189 of FIG. 1) may be disposed in the second housing 320. According to an embodiment of the disclosure, the second battery 722 may be electrically connected to the charger 712 or the PMIC 711 disposed in the first housing 310 through an FPCB 731 (or PCB) disposed to connect between the first housing 310 and the second housing 320.

According to an embodiment of the disclosure, the PMIC 711 and the charger 712 may be merged into one module or disposed as separate modules. For example, the PMIC 711 may include a charger 712.

As illustrated in FIG. 7, the electronic device 300 may include a plurality of batteries 721 and 722, for example, the first battery 721 and the second battery 722, and in the case that the first battery 721 and the second battery 722 are disposed to be physically separated, impedance asymmetry may occur in charging paths of the first and second batteries 721 and 722 or discharging paths of the first and second batteries 721 and 722. For example, the first battery 721 is directly connected to the charger 712 as the first battery 721 is disposed in the first housing 310, but the second battery 722 may be connected to the charger 712 via the FPCB 731. Therefore, a charging path in which a charging voltage output from the charger 712 is supplied to the first battery 721 and a charging path in which a charging voltage output from the charger 712 is supplied to the second battery 722 may have different impedances. Due to the impedance deviation, a first charging current $I_1$ supplied to the first battery 721 and a second charging current I2 supplied to the second battery 722 may have a deviation or asymmetry and therefore, there occurs the case that a charging current greater than the maximum allowable charging current is supplied to a specific battery (e.g., the first battery 721). Thus, the stability of the first and second batteries 721 and 722 and/or the lifespan of the first and second batteries 721 and 722 may be deteriorated. The impedance deviation may cause a deviation and/or asymmetry in discharge current when the first and second batteries 721 and 722 are discharged, and cause deterioration in stability of the first and second batteries 721 and 722 and/or the lifespan of the first and second batteries 721 and 722.

As will be described later with reference to FIGS. 8 to 10, 11A, 11B, 12, 13, 14A, 14B, and 15, a method of increasing the stability of the first and second batteries 721 and 722 due to the deviation of the impedance and increasing the lifespan of the first and second batteries 721 and 722 as the electronic device 300 according to various embodiments includes a balancing circuit (e.g., the balancing circuit 830 of FIG. 8) for balancing a voltage V1 of the first battery 721 and a voltage V2 of the second battery 722 will be described.

The electronic device 300 illustrated in FIGS. 3 to 7 is only one form of an electronic device in which the first battery 721 and the second battery 722 are disposed to be physically separated, and various embodiments of this document are not limited to a form factor of the electronic device and may be variously modified and applied.

FIG. 8 is a block diagram illustrating a component constitution of an electronic device according to an embodiment of the disclosure.

Referring to FIG. 8, an arrow 801 may represent a current path (or charging path) when the electronic device 300 charges the first battery 721 and the second battery 722, and an arrow 802 may represent a current path (or discharge path) when the first battery 721 and the second battery 722 are discharged.

The electronic device 300 illustrated in FIG. 8 may include components at least partially similar to or different from the electronic device 300 illustrated in FIG. 1 or the electronic device 300 illustrated in FIGS. 3 to 7. Hereinafter, only non-described or changed components will be described with reference to FIG. 8.

With reference to FIG. 8, the electronic device 300 according to various embodiments may be a foldable electronic device 300, as illustrated in FIGS. 3 to 6. For example, the electronic device 300 may include the first housing 310 and a second housing 320 rotatably coupled to each other.

According to an embodiment of the disclosure, the charger 712 of the electronic device 300 may receive a voltage or current from an external device or a wireless charging circuit 810, and supply a designated voltage and/or current to the first and second batteries 721 or 722 using the input voltage or current. According to an embodiment of the disclosure, the wireless charging circuit 810 is a device connected to the electronic device 300 by wire and may be referred to as a charger, a power supply, or a travel adapter. According to an embodiment of the disclosure, the wireless charging circuit 810 may include a wireless charging coil. For example, the electronic device 300 may wirelessly receive power from the external device through a wireless charging coil, and the wirelessly supplied power may be used for charging the first and second first and second batteries 721 and 722 through the charger 712. According to various embodiments of the disclosure, the electronic device 300 may include the wireless charging circuit 810 of a magnetic induction type and/or a magnetic resonance type.

According to an embodiment of the disclosure, while the electronic device 300 is connected to the wireless charging circuit 810 by wire or receives power through the wireless charging circuit 810, the charger 712 may charge the first and second batteries 721 and 722 using some of input power, and supply power (e.g., voltage or current) necessary for driving a system 820 using another part of input power.

According to an embodiment of the disclosure, the system 820 may be a term referring to at least a part of electronic components, for example, the processor 120 and/or the display module (e.g., the display module 160 of FIG. 1) embedded in the electronic device 300.

According to an embodiment of the disclosure, while the electronic device 300 is connected to the wireless charging circuit 810 by wire or receives power through the wireless charging circuit 810, the system 820 may receive required power (e.g., voltage or current) from the charger 712.

According to an embodiment of the disclosure, when the electronic device 300 is not connected to the wireless charging circuit 810 by wire and does not receive power through the wireless charging circuit 810, the system 820 may receive required power (e.g., voltage or current) from the first battery 721 and/or the second battery 722. In this way, a period in which the system 820 receives required power (e.g., voltage or current) from the first battery 721 and/or the second battery 722 may be referred to as a discharging period of the first and second batteries 721 and 722. For example, when the electronic device 300 is not connected to the wireless charging circuit 810 by wire and does not receive power through the wireless charging circuit 810, the first battery 721 and the second battery 722 may be discharged.

According to an embodiment of the disclosure, the first battery 721 may be disposed in the first housing 310, and the first battery 721 may be charged by a voltage and current supplied from the charger 712. For example, the first battery 721 may be electrically connected to the charger 712. According to an embodiment of the disclosure, the balancing circuit 830 may be disposed between the charger 712 and the first battery 721.

According to an embodiment of the disclosure, the balancing circuit 830 may detect a voltage V1 of the first battery 721 and a voltage V2 of the second battery 722 through a voltage detection circuit 840, and control cell balancing of the first battery 721 and the second battery 722. The balancing circuit 830 according to various embodiments may detect a voltage V1 of the first battery 721 and a voltage V2 of the second battery 722 during a charging period of the first and second batteries 721 and 722 and a discharging period of the first and second batteries 721 and 722, and implement cell balancing of the first battery 721 and the second battery 722 through an operation of the switching regulator based on the voltage V1 of the first battery 721 and the voltage V2 of the second battery 722.

According to an embodiment of the disclosure, the second battery 722 may be disposed in the second housing 320, and the second battery 722 may be charged by receiving a voltage and current supplied from the charger 712 through the FPCB 731. For example, the second battery 722 may be electrically connected to the charger 712 and be connected to the first battery 721 in parallel.

According to various embodiments of the disclosure, a charging path in which a charging voltage output from the charger 712 is supplied to the first battery 721 and a charging path in which a charging voltage output from the charger 712 is supplied to the second battery 722 may have different impedances due to the FPCB 731. As will be described later with reference to FIGS. 9, 10, 11A, 11B, 12, 13, 14A, 14B, and 15, the electronic device 300 according to various embodiments may compensate for the impedance deviation by the operation of the balancing circuit 830, thereby increasing stability of the first and second batteries 721 and 722 and the lifespan of the first and second batteries 721 and 722.

FIG. 9 is a circuit diagram specifically illustrating a balancing circuit according to an embodiment of the disclosure.

Referring to FIG. 9, the balancing circuit 830 illustrated in FIG. 9 may include components at least partially similar to or different from the balancing circuit 830 illustrated in FIG. 8. Hereinafter, only non-described or changed components will be described with reference to FIG. 9.

With reference to FIG. 9, the balancing circuit 830 according to various embodiments may be implemented into a buck regulator. According to an embodiment of the disclosure, the balancing circuit 830 may be branched from a first node n1, which is an output terminal of the charger 712 and be disposed between the charger 712 and the first battery 721. According to an embodiment of the disclosure, the second battery 722 may be branched from the first node n1 to be connected in parallel with the first battery 721. According to an embodiment of the disclosure, an FPCB 731 may be disposed between the second battery 722 and the first node n1, and the second battery 722 may be electrically connected to the charger 712 through the FPCB 731. As described above, the FPCB 731 may generate an impedance deviation in a charging path of the first and second batteries 721 and 722 or a discharging path of the first and second batteries 721 and 722.

According to an embodiment of the disclosure, as the balancing circuit 830 includes a first transistor 911 and second transistor 912 connected in series between the first node n1 and the ground and the inductor 913 branched from the second node n2 disposed between the first transistor 911 and the second transistor 912, when the first and second batteries 721 and 722 are charged, in the case that the voltage V1 of the first battery 721 and the voltage V2 of the second battery 722 are unbalanced, the balancing circuit 830 may serve as a buck regulator.

According to an embodiment of the disclosure, a capacitor 914 may be disposed between the inductor 913 and the ground, and the first battery 721 may be electrically connected to a third node n3 disposed between the inductor 913 and the capacitor 914 to form a discharge path connected to the system 820 (e.g., the system 820 of FIG. 8) or a charge path connected to the charger 712.

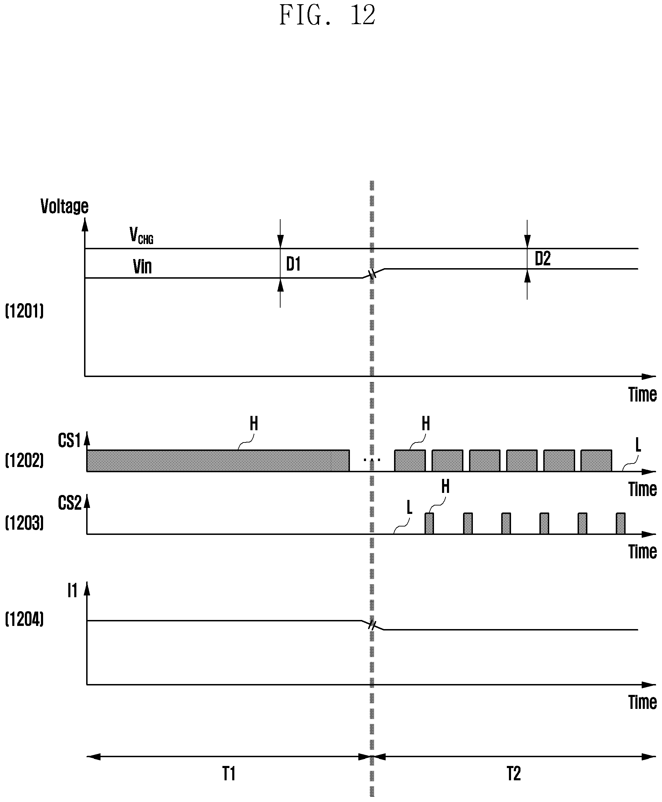

According to an embodiment of the disclosure, the first transistor 911 may be controlled by a first control signal CS1 input from the control signal generator 920. According to an embodiment of the disclosure, the first transistor 911 may be a metal oxide semiconductor field effect transistor (MOSFET), and be turned on in response to the first control signal CS1 being in a high state H (e.g., a high state H of FIG. 12). According to an embodiment of the disclosure, the first transistor 911 may connect the inductor 913 and the first node n1, which is an output terminal of the charger 712 to each other when turned on.

According to an embodiment of the disclosure, the second transistor 912 may be controlled by a second control signal CS2 input from the control signal generator 920. According to an embodiment of the disclosure, the second transistor 912 may be a metal oxide semiconductor field effect transistor (MOSFET), and be turned on in response to the second control signal CS2 being in a high state H (e.g., a high state H of FIG. 12). According to an embodiment of the disclosure, the second transistor 912 may connect the ground and the second node n2 connected to the source of the first transistor 911 to each other when turned on.

According to an embodiment of the disclosure, the balancing circuit 830 may include a control signal generator 920 for controlling the first transistor 911 and the second transistor 912. According to an embodiment of the disclosure, the balancing circuit 830 may detect a voltage V1 of the first battery 721 and a voltage V2 of the second battery 722 through a voltage detection circuit 840 and generate a first control signal CS1 and a second control signal CS2 based on the detected voltage V1 of the first battery 721 and voltage V2 of the second battery 722.

According to various embodiments of the disclosure, the balancing circuit 830 may constitute a step-down circuit in a switching regulator method that pulse width modulation (PWM) controls the first transistor 911 and the second transistor 912, thereby significantly reducing power loss compared to a linear regulator method using a variable resistor and operating as an ideal transformer with almost no power loss.

According to an embodiment of the disclosure, in order to PWM control the first control signal CS1 and the second control signal CS2, the control signal generator 920 may include at least one of a triangle wave generator, a flip-flop, a logic gate, and/or a comparator operating according to a voltage V1 of the first battery 721 and a voltage V2 of the second battery 722.

A symbol $V_{CHG}$ not described in FIG. 9 may indicate a charger output voltage $V_{CHG}$ output from the charger 712.

A symbol I1 not described in FIG. 9 may indicate a first charging current I1 input to the first battery 721.

A symbol I2 not described in FIG. 9 may indicate a second charging current I2 input to the second battery 722.

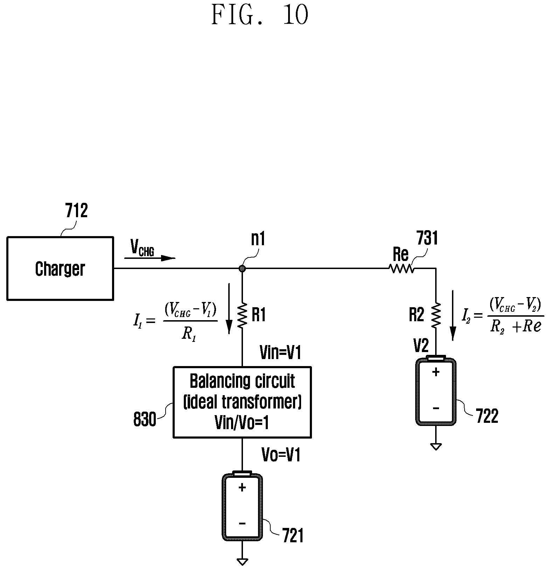

FIG. 10 is a circuit diagram illustrating an operation of a balancing circuit in a case that a voltage V1 of a first battery and a voltage V2 of a second battery are the same when the first battery and the second battery are charged according to according to an embodiment of the disclosure.

Referring to FIG. 10, when the first battery 721 and the second battery 722 are charged, the balancing circuit 830 according to an embodiment of the disclosure may detect the voltage V1 of the first battery 721 and the voltage V2 of the second battery 722. For example, the balancing circuit 830 may detect the voltage V1 of the first battery 721 and the voltage V2 of the second battery 722 through a voltage detection circuit 840. According to an embodiment of the disclosure, in the case that the voltage V1 of the first battery 721 and the voltage V2 of the second battery 722 are the same, the electronic device 300 may control the balancing circuit 830 so that the voltage and current input to the balancing circuit 830 are bypassed and supplied to the first battery 721. For example, when a voltage input to an input terminal of the balancing circuit 830 is defined as Vin and a voltage of an output terminal of the balancing circuit 830 is defined as Vo, the electronic device 300 may control the balancing circuit 830 so that Vin and Vo are the same voltage.

According to an embodiment of the disclosure, when the first battery 721 and the second battery 722 are charged, in the case that the voltage V1 of the first battery 721 and the voltage V2 of the second battery 722 are the same, in order to control the balancing circuit 830 to operate as a bypass circuit, the electronic device 300 may configure a duty cycle of a first control signal CS1 for controlling the first transistor 911 to 100% and configure a duty cycle of a second control signal CS2 for controlling the second transistor 912 to 0%. According to an embodiment of the disclosure, as the duty cycle of the first control signal CS1 is configured to 100%, the first transistor 911 of the balancing circuit 830 may be continuously turned on. According to an embodiment of the disclosure, as the duty cycle of the second control signal CS2 is configured to 0%, the second transistor 912 of the balancing circuit 830 may be continuously turned off.

As illustrated in FIG. 10, when the balancing circuit 830 operates as a bypass circuit upon charging the first battery 721 and the second battery 722, a deviation may occur between the impedance of a charging path supplied to the first battery 721 and the impedance of a charging path supplied to the second battery 722 due to the FPCB 731. For example, when the balancing circuit 830 operates as a bypass circuit, a first charging current I1 branched from the first node n1 and supplied to the first battery 721 may be defined as in Equation 1, and a second charging current I2 supplied from the first node n1 to the second battery 722 via the FPCB 731 may be defined as in Equation 2.

$$I_1 = \frac{(V_{CHG} - V_1)}{R_1}$$

... Equation 1

$$I_2 = \frac{(V_{CHG} - V_2)}{R_2 + Re}$$

... Equation 2

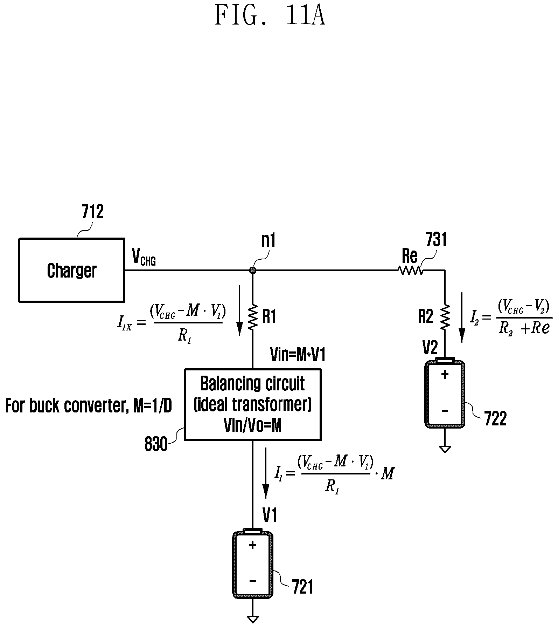

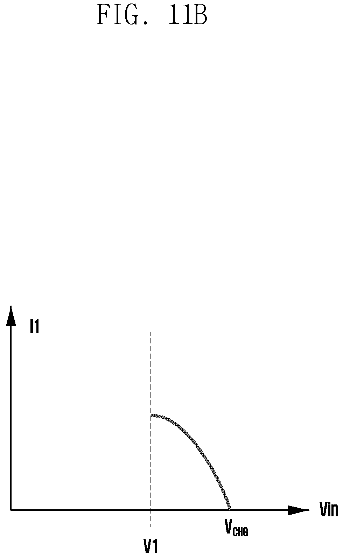

In Equations 1 and 2, when it is assumed that a resistor R1 and a resistor R2 are substantially the same or similar, a second charging current I2 may be smaller than the first charging current I2 due to a resistor Re of the FPCB 731. For example, because the impedance of a charging path supplied from the charger 712 to the second battery 722 is greater than that of a charging path supplied from the charger 712 to the first battery 721, the first charging current I1 may be greater than the second charging current I2. When the first charge current I1 is greater than the second charge current I2, the voltage V1 of the first battery 721 may rise faster than the voltage V2 of the second battery 722, and a deviation may occur between the voltage V1 of the first battery 721 and the voltage V2 of the second battery 722. While the balancing circuit 830 operates as a bypass circuit, when it is detected that the deviation between the voltage V1 of the first battery 721 and the voltage V2 of the second battery 722 occurs, by controlling the balancing circuit 830, the electronic device 300 according to various embodiments may compensated for the deviation, as illustrated in FIGS. 11A, 11B, and 12 to be described later.

FIG. 11A is a circuit diagram illustrating an operation of a balancing circuit in a case that a voltage V1 of a first battery and a voltage V2 of a second battery are different when the first battery and the second battery are charged according to an embodiment of the disclosure.

FIG. 11B is a graph illustrating a change in charging current of a first battery according to an operation of a balancing circuit when the first battery and the second battery are charged according to an embodiment of the disclosure.

Referring to FIG. 11A, while the balancing circuit 830 operates as a bypass circuit, in the case that the voltage V1 of the first battery 721 is greater than the voltage V2 of the second battery 722, the electronic device 300 according to various embodiments may control the balancing circuit 830 to operate as a buck regulator. For example, when a voltage input to the input terminal of the balancing circuit 830 is defined as Vin and a voltage of the output terminal of the balancing circuit 830 is defined as Vo, by generating a virtual high voltage at Vin, which is a voltage of the input terminal of the balancing circuit 830, the electronic device 300 may reduce a first charging current I1 branched from the first node n1 and input in a direction of the first battery 721.

According to an embodiment of the disclosure, in the case that the voltage V1 of the first battery 721 is greater than the voltage V2 of the second battery 722, by configuring a duty cycle of the first control signal CS1 to a value, for example, D, smaller than 100%, the balancing circuit 830 may control a ratio of Vin and Vo as in Equation 3.

$$\frac{Vin}{Vo} = M = \frac{1}{D}$$

... Equation 3

According to an embodiment of the disclosure, when the balancing circuit 830 configures the duty cycle of the first control signal CS1 to D, which is a value smaller than 100%, Vin gradually increases, and the balancing circuit 830 may operate as in an ideal transformer. In this way, when a potential difference between Vin, which is a voltage of the input terminal of the balancing circuit 830 and a charger output voltage VCHG, which is a voltage output from the charger 712 decreases, the first charging current I1 branched from the first node n1 and input in a direction of the first battery 721 may decrease.

According to various embodiments of the disclosure, while the balancing circuit 830 controls the duty cycle of the first control signal CS1 to D, which is a value smaller than 100%, the first charge current I1 branched from the first node n1 and supplied to the first battery 721 may be defined as in Equation 4, and the second charge current I2 supplied from the first node n1 to the second battery 722 via the FPCB 731 may be defined as in Equation 5.

$$I_1 = \frac{(V_{CHG} - M \cdot V_1)}{R_1} \cdot M \qquad \text{... Equation 4}$$

$$I_2 = \frac{(V_{CHG} - V_2)}{R_2 + R_e} \qquad \text{... Equation 5}$$

Referring to FIG. 11B, it may be identified that the voltage of the input terminal of the balancing circuit 830 is Vin and a charging current of the first battery 721 according to the operation of the balancing circuit 830 increases from a voltage V1 of the first battery 721 and gradually decreases as it approaches the charger output voltage VCHG.

When the first battery 721 and the second battery 722 are charged, in the case that the voltage V1 of the first battery 721 is greater than the voltage V2 of the second battery 722, the balancing circuit 830 configures the duty cycle of the first control signal CS1 to D, which is a value smaller than 100%. Thus, by increasing Vin, which is a voltage of the input terminal of the balancing circuit 830, the electronic device 300 according to various embodiments may lower a charging current of the first battery 721 and quickly induce balancing between the voltage V1 of the first battery 721 and the voltage V2 of the second battery 722.

FIG. 12 is a graph illustrating a control signal for controlling a balancing circuit and a corresponding change in charging current when a first battery and a second battery are charged according to an embodiment of the disclosure.

Referring to FIG. 12, a graph 1201 may be a graph illustrating a charger output voltage VCHG, which is a voltage output from the charger 712 and Vin, which is a voltage of an input terminal of the balancing circuit 830 when the first battery 721 and the second battery 722 are charged.

Referring to FIG. 12, a graph 1202 may be a graph illustrating a change in a first control signal CS1 when the first battery 721 and the second battery 722 are charged. In the graph 1202, a high state H of the first control signal CS1 may mean a voltage level that turns on the first transistor 911, and a low state L of the first control signal CS1 may mean a voltage level that turns off the first transistor 911.

Referring to FIG. 12, a graph 1203 may be a graph illustrating a change in the second control signal CS2 when the first battery 721 and the second battery 722 are charged. In the graph 1203, a high state H of the second control signal CS2 may mean a voltage level that turns on the second transistor 912, and a low state L of the second control signal CS2 may mean a voltage level that turns off the second transistor 912.

Referring to FIG. 12, a graph 1204 may be a graph illustrating a change in a first charging current I1 input to the first battery 721 when the first battery 721 and the second battery 722 are charged.

Referring to FIG. 12, during a first period T1 in which a voltage V1 of the first battery 721 and a voltage V2 of the second battery 722 are the same, the balancing circuit 830 according to an embodiment may maintain the first control signal CS1 at a high state H and maintain the second control signal CS2 at a low state L. Accordingly, the balancing circuit 830 may substantially operate as a bypass circuit for bypassing the input current and voltage. When the balancing circuit 830 operates as a bypass circuit, the impedance of a charging path supplied from the charger 712 to the second battery 722 is greater than that of a charging path supplied from the charger 712 to the first battery 721. Thus, a first charge current I1 may be greater than a second charge current I2, and the voltage V1 of the first battery 721 may increase faster than the voltage V2 of the second battery 722.

Referring to FIG. 12, when the voltage V1 of the first battery 721 is greater than the voltage V2 of the second battery 722, the balancing circuit 830 according to an embodiment may operate as in the second period T2. According to an embodiment of the disclosure, during a second period T2 in which the voltage V1 of the first battery 721 is greater than the voltage V2 of the second battery 722, the balancing circuit 830 may configure a duty cycle of a first control signal CS1 to D, which is a value smaller than 100%, and control the second control signal CS2 to have an antiphase with the first control signal CS1. For example, the balancing circuit 830 may control the second control signal CS2 to a low state L while the first control signal CS1 is in a high state H, and control the second control signal CS2 to a high state H while the first control signal CS1 is in a low state L. When the balancing circuit 830 according to an embodiment lowers the duty cycle of the first control signal CS1, Vin, which is a voltage of the input terminal of the balancing circuit 830 increases, and accordingly, a potential difference between the charger output voltage VCHG and Vin, which is a voltage of the input terminal decreases from a first potential difference D1 to a second potential difference D2. In the balancing circuit 830, as the potential difference between the charger output voltage VCHG and Vin, which is a voltage of the input terminal decreases, when the first battery 721 and the second battery 722 are charged, the first charging current I1 input to the first battery 721 may decrease. When the first charge current I1 decreases in the second period T2, the voltage V1 of the first battery 721 and the voltage V2 of the second battery 722 are equally adjusted again. Thus, cell balancing may be implemented. In the case that the voltage V1 of the first battery 721 and the voltage V2 of the second battery 722 are equally adjusted again, the balancing circuit 830 according to an embodiment may perform an operation of the first period T1.

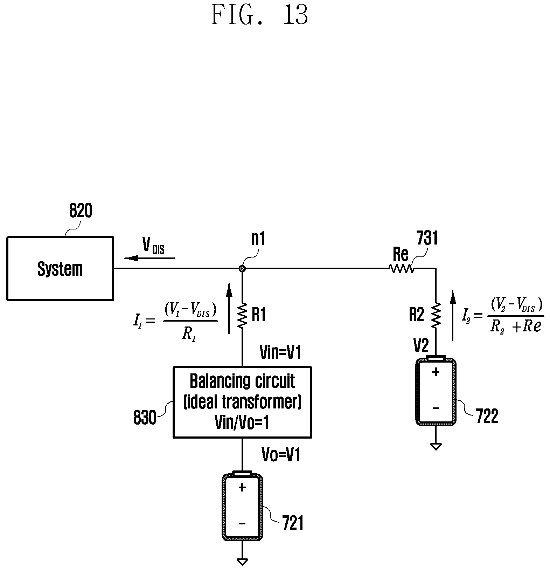

FIG. 13 is a circuit diagram illustrating an operation of a balancing circuit in a case that a voltage V1 of a first battery and a voltage V2 of a second battery are the same when the first battery and the second battery are discharged according to an embodiment of the disclosure.

Referring to FIG. 13, the balancing circuit 830 according to an embodiment may detect the voltage V1 of the first battery 721 and the voltage V2 of the second battery 722 through a voltage detection circuit 840 when the first battery 721 and the second battery 722 are discharged. For example, a current discharged from the first battery 721 may be supplied to the system 820 via the balancing circuit 830 and a first node n1, and a current discharged from the second battery 722 may be supplied to the system 820 via the FPCB 731 and the first node n1. According to an embodiment of the disclosure, in the case that the voltage V1 of the first battery 721 and the voltage V2 of the second battery 722 are the same, the electronic device 300 may control the balancing circuit 830 so that a voltage and a current discharged from the first battery 721 are bypassed and supplied to the first node n1 and the system 820. For example, when a voltage of an input terminal of the balancing circuit 830 connected to the first node n1 is defined as Vin, and a voltage of an output terminal of the balancing circuit 830 connected to the first battery 721 is defined as Vo, the electronic device 300 may control the balancing circuit 830 so that Vin and Vo become the same voltage V1.

According to an embodiment of the disclosure, when the first battery 721 and the second battery 722 are discharged, in the case that the voltage V1 of the first battery 721 and the voltage V2 of the second battery 722 are the same, in order to control the balancing circuit 830 to operate as a bypass circuit, the electronic device 300 may configure a duty cycle of a first control signal CS1 to 100% and configure a duty cycle of a second control signal CS2 to 0%. According to an embodiment of the disclosure, as the duty cycle of the first control signal CS1 is configured to 100%, the first transistor 911 of the balancing circuit 830 may be continuously turned on. According to an embodiment of the disclosure, as the duty cycle of the second control signal CS2 is configured to 0%, the second transistor 912 of the balancing circuit 830 may be continuously turned off.

As illustrated in FIG. 13, when the first battery 721 and the second battery 722 are discharged, if the balancing circuit 830 operates as a bypass circuit, a deviation may occur between the impedance according to a discharge path of the first battery 721 and the impedance according to a discharge path of the second battery 722 due to the FPCB 731. For example, when the balancing circuit 830 operates as a bypass circuit, a first discharge current I1 supplied from the first battery 721 to the first node n1 and the system 820 may be defined as in Equation 6 and a second discharge current I2 supplied from the second battery 722 to the first node n1 and the system 820 via the FPCB 731 may be defined as in Equation 7.

$$I_1 = \frac{(V_1 - V_{DIS})}{R_1}$$

... Equation 6

$$I_2 = \frac{(V_2 - V_{DIS})}{R_2 + Re}$$

... Equation 7

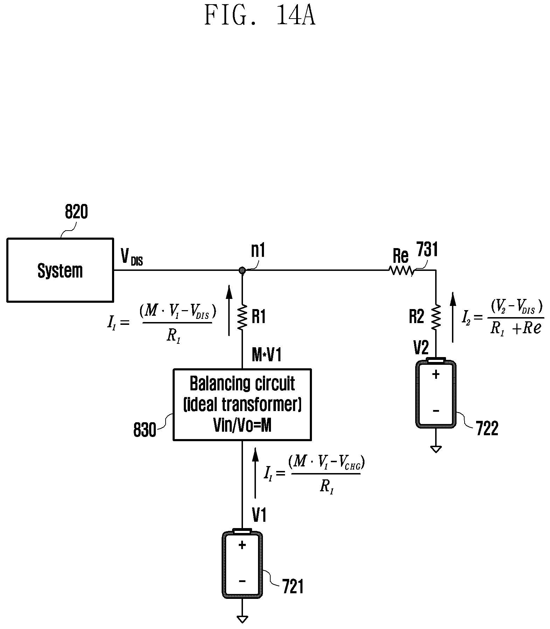

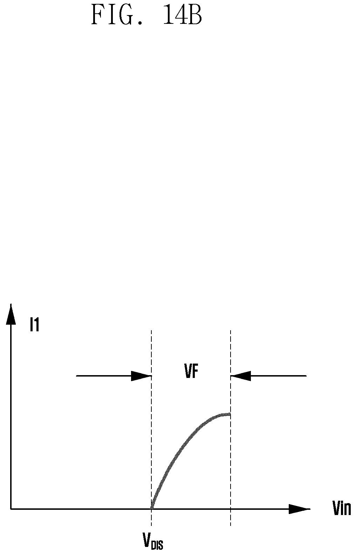

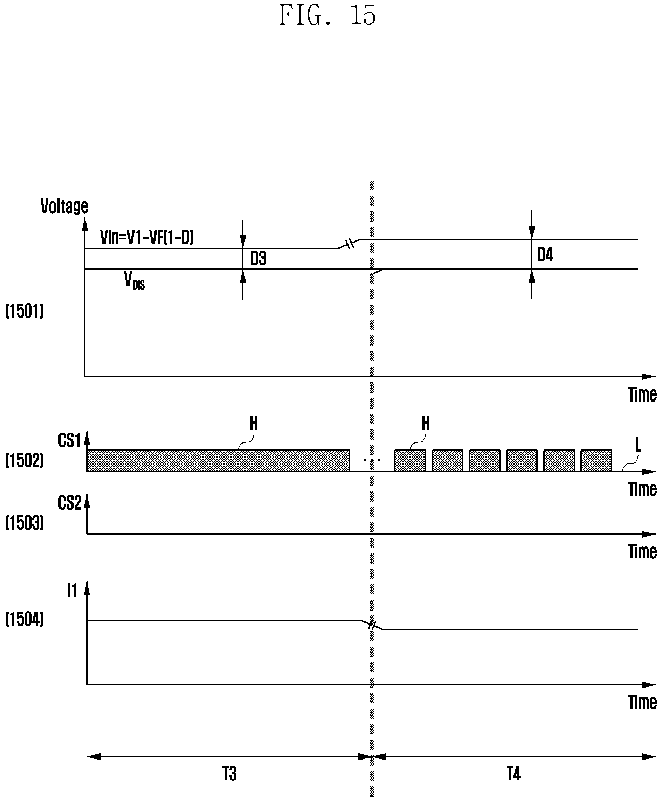

In Equations 6 and 7, when it is assumed that a resistor R1 and a resistor R2 are substantially the same or similar, the second discharge current I2 may be smaller than the first discharge current I1 due to a resistor Re of the FPCB 731. When the first discharge current I1 is greater than the second discharge current I2, the voltage V1 of the first battery 721 may fall faster than the voltage V2 of the second battery 722, and a deviation may occur between the voltage V1 of the first battery 721 and the voltage V2 of the second battery 722. In the electronic device 300 according to various embodiments of the disclosure, when it is detected that a deviation occurs between the voltage V1 of the first battery 721 and the voltage V2 of the second battery 722 while the balancing circuit 830 operates as a bypass circuit, by controlling the balancing circuit 830, the electronic device 300 may compensate for the deviation, as illustrated in FIGS. 14A, 14B, and 15 to be described later.

FIG. 14A is a circuit diagram illustrating an operation of a balancing circuit in a case that a voltage V1 of a first battery and a voltage V2 of a second battery are different when the first battery and the second battery are discharged according to an embodiment of the disclosure.

FIG. 14B is a graph illustrating a change in input terminal current of a balancing circuit according to an operation of the balancing circuit when a first battery and a second battery are discharged according to an embodiment of the disclosure.

Referring to FIG. 14A, while the balancing circuit 830 operates as a bypass circuit when the first battery 721 and the second battery 722 are discharged, in the case that the voltage V2 of the second battery 722 is greater than the voltage V1 of the first battery 721, the electronic device 300 according to various embodiments may control to switch repeatedly only the first transistor 911 among the first transistor 911 and the second transistor 912 of the balancing circuit 830. For example, in the electronic device 300, the first transistor 911 may reduce a conduction duty rate (e.g., a duty cycle of the first control signal CS1), and the second transistor 912 may be fully turned off. Thus, a voltage of an input terminal of the balancing circuit 830 may be lowered. For example, as the first transistor 911 is turned off, the voltage of the input terminal of the balancing circuit 830 may be dropped by a forwarding voltage VF of about 0.7V than the voltage V1 of the first battery 721 by a body diode of the first transistor 911. According to an embodiment of the disclosure, when the first battery 721 and the second battery 722 are discharged, in the case that the voltage V2 of the second battery 722 is greater than the voltage V1 of the first battery 721, by lowering the voltage of the input terminal of the balancing circuit 830, the electronic device 300 may reduce a first discharge current I1 discharged from the first battery 721. For example, in the case that the voltage V2 of the second battery 722 is greater than the voltage V1 of the first battery 721, the balancing circuit 830 operates like a diode circuit in which voltage drop is controlled, thereby lowering the voltage of the input terminal thereof and reducing the first discharge current I1 of the first battery 721.

According to an embodiment of the disclosure, the voltage of the input terminal of the balancing circuit 830 lowered by configuring the duty cycle of the first control signal CS1 to a value smaller than 100%, for example, D may be defined as in Equation 8.

$$Vin = V_1 - VF(1-D)$$ ... Equation 8

According to various embodiments of the disclosure, while the balancing circuit 830 controls the duty cycle of the first control signal CS1 to D, which is smaller than 100%, a first discharge current I1 discharged from the first battery 721 may be defined as in Equation 9, and a second discharge current I2 discharged from the second battery 722 may be defined as in Equation 10.

$$I_1 = \frac{(M \cdot V_1 - V_{DIS})}{R_1}$$ ... Equation 9

$$I_2 = \frac{(V_2 - V_{DIS})}{R_1 + Re}$$ ... Equation 10

In Equation 9, I1 is a first discharge current, VDIS is a voltage of the output terminal of the charger 712, M is a value corresponding to the function of the duty cycle, V1 is a voltage of the first battery 721, and R1 may be a resistor between the first node n1 and the balancing circuit 830.

In Equation 10, I2 is a second discharge current, V2 is a voltage of the second battery 722, Re is a resistor of the FPCB, and R2 is a resistor between the FPCB and the second battery 722.

Referring to FIG. 14B, it may be identified that the voltage of the input terminal of the balancing circuit 830 is Vin and the first discharge current I1 of the first battery 721 according to the operation of the balancing circuit 830 decreases from a voltage V1 of the first battery 721 and gradually decreases as it approaches the discharge voltage VDIS (or the charger output voltage VCHG) input to the system 820.

When the first battery 721 and the second battery 722 are discharged, in the case that the voltage V2 of the second battery 722 is greater than the voltage V1 of the first battery 721, by dropping Vin, which is a voltage of the input terminal of the balancing circuit 830, the electronic device 300 according to various embodiments may lower the first discharge current I1 of the first battery 721 and quickly induce balancing between the voltage V1 of the first battery 721 and the voltages V2 of the second battery 722.

FIG. 15 is a graph illustrating a control signal for controlling a balancing circuit and a corresponding change in discharge current when a first battery and a second battery are discharged according to an embodiment of the disclosure.

Referring to FIG. 15, a graph 1501 may be a graph illustrating a discharge voltage VDIS (or a charger output voltage VCHG) input to the system 820 and Vin, which is a voltage of an input terminal of the balancing circuit 830 when the first battery 721 and the second battery 722 are discharged.

Referring to FIG. 15, a graph 1502 may be a graph illustrating a change in the first control signal CS1 when the first battery 721 and the second battery 722 are discharged. In the graph 1502, a high state H of the first control signal CS1 may mean a voltage level that turns on the first transistor 911, and a low state L of the first control signal CS1 may mean a voltage level that turns off the first transistor 911.

Referring to FIG. 15, a graph 1503 may be a graph illustrating a change in the second control signal CS2 when the first battery 721 and the second battery 722 are discharged. In the graph 1503, a high state H of the second control signal CS2 may mean a voltage level that turns on the second transistor 912, and a low state L of the second control signal CS2 may mean a voltage level that turns off the second transistor 912. As illustrated, when the first battery 721 and the second battery 722 are discharged, the second control signal CS2 may be continuously configured to a low state L.

Referring to FIG. 15, a graph 1504 may be a graph illustrating a change in a first discharge current I1 discharged from the first battery 721 when the first battery 721 and the second battery 722 are discharged.

Referring to FIG. 15, the balancing circuit 830 according to an embodiment may maintain the first control signal CS1 at a high state H and maintain the second control signal CS2 at a low state L during a third period T3 in which the voltage V1 of the first battery 721 and the voltage V2 of the second battery 722 are the same. Accordingly, the balancing circuit 830 may substantially operate as a bypass circuit for bypassing a current and voltage of the first battery 721. When the balancing circuit 830 operates as a bypass circuit, the voltage V1 of the first battery 721 may decrease faster than the voltage V2 of the second battery 722 due to the impedance deviation of the discharge path, as described above.

Referring to FIG. 15, when the voltage V1 of the first battery 721 is smaller than the voltage V2 of the second battery 722, the balancing circuit 830 according to an embodiment may operate as in the fourth period T4. According to an embodiment of the disclosure, the balancing circuit 830 may configure a duty cycle of a first control signal CS1 to D, which is a value smaller than 100% and control the second control signal CS2 to a low state L during a fourth period T4 in which the voltage V1 of the first battery 721 is smaller than the voltage V2 of the second battery 722. When the balancing circuit 830 according to an embodiment lowers the duty cycle of the first control signal CS1, Vin, which is a voltage of the input terminal of the balancing circuit 830 is lowered. Thus, a potential difference between a discharge voltage VDIS (or a charger output voltage VCHG) input to the system 820 and Vin decreases from a third potential difference D3 to a fourth potential difference D4. In the balancing circuit 830, as a potential difference between the discharge voltage VDIS (or the charger output voltage VCHG) input to the system 820 and Vin, which is a voltage of the input terminal of the balancing circuit 830 decreases, when the first battery 721 and the second battery 722 are discharged, a first discharge current I1 discharged from the first battery 721 may decrease. When the first discharge current I1 decreases in the fourth period T4, the voltage V1 of the first battery 721 and the voltage V2 of the second battery 722 are equally adjusted again. Thus, cell balancing may be implemented.

While the disclosure has been shown and described with reference to various embodiments thereof, it will be understood by those skilled in the art that various changes in form and details may be made therein without departing from the scope of the disclosure as defined by the appended claims.

$$I_2 = \frac{(V_2 - V_{DIS})}{R_1 + Re}$$

$$\dots \text{Equation 10}$$

In Equation 9, I1 is a first discharge current, VDIS is a voltage of the output terminal of the charger 712, M is a value corresponding to the function of the duty cycle, V1 is a voltage of the first battery 721, and R1 may be a resistor between the first node n1 and the balancing circuit 830.

In Equation 10, I2 is a second discharge current, V2 is a voltage of the second battery 722, Re is a resistor of the FPCB, and R2 is a resistor between the FPCB and the second battery 722.

Referring to FIG. 14B, it may be identified that the voltage of the input terminal of the balancing circuit 830 is Vin and the first discharge current I1 of the first battery 721 according to the operation of the balancing circuit 830 decreases from a voltage V1 of the first battery 721 and gradually decreases as it approaches the discharge voltage VDIS (or the charger output voltage VCHG) input to the system 820.

When the first battery 721 and the second battery 722 are discharged, in the case that the voltage V2 of the second battery 722 is greater than the voltage V1 of the first battery 721, by dropping Vin, which is a voltage of the input terminal of the balancing circuit 830, the electronic device 300 according to various embodiments may lower the first discharge current I1 of the first battery 721 and quickly induce balancing between the voltage V1 of the first battery 721 and the voltages V2 of the second battery 722.

FIG. 15 is a graph illustrating a control signal for controlling a balancing circuit and a corresponding change in discharge current when a first battery and a second battery are discharged according to an embodiment of the disclosure.

Referring to FIG. 15, a graph 1501 may be a graph illustrating a discharge voltage VDIS (or a charger output voltage VCHG) input to the system 820 and Vin, which is a voltage of an input terminal of the balancing circuit 830 when the first battery 721 and the second battery 722 are discharged.

Referring to FIG. 15, a graph 1502 may be a graph illustrating a change in the first control signal CS1 when the first battery 721 and the second battery 722 are discharged. In the graph 1502, a high state H of the first control signal CS1 may mean a voltage level that turns on the first transistor 911, and a low state L of the first control signal CS1 may mean a voltage level that turns off the first transistor 911.

Referring to FIG. 15, a graph 1503 may be a graph illustrating a change in the second control signal CS2 when the first battery 721 and the second battery 722 are discharged. In the graph 1503, a high state H of the second control signal CS2 may mean a voltage level that turns on the second transistor 912, and a low state L of the second control signal CS2 may mean a voltage level that turns off the second transistor 912. As illustrated, when the first battery 721 and the second battery 722 are discharged, the second control signal CS2 may be continuously configured to a low state L.

Referring to FIG. 15, a graph 1504 may be a graph illustrating a change in a first discharge current I1 discharged from the first battery 721 when the first battery 721 and the second battery 722 are discharged.

Referring to FIG. 15, the balancing circuit 830 according to an embodiment may maintain the first control signal CS1 at a high state H and maintain the second control signal CS2 at a low state L during a third period T3 in which the voltage V1 of the first battery 721 and the voltage V2 of the second battery 722 are the same. Accordingly, the balancing circuit 830 may substantially operate as a bypass circuit for bypassing a current and voltage of the first battery 721. When the balancing circuit 830 operates as a bypass circuit, the voltage V1 of the first battery 721 may decrease faster than the voltage V2 of the second battery 722 due to the impedance deviation of the discharge path, as described above.

Referring to FIG. 15, when the voltage V1 of the first battery 721 is smaller than the voltage V2 of the second battery 722, the balancing circuit 830 according to an embodiment may operate as in the fourth period T4. According to an embodiment of the disclosure, the balancing circuit 830 may configure a duty cycle of a first control signal CS1 to D, which is a value smaller than 100% and control the second control signal CS2 to a low state L during a fourth period T4 in which the voltage V1 of the first battery 721 is smaller than the voltage V2 of the second battery 722. When the balancing circuit 830 according to an embodiment lowers the duty cycle of the first control signal CS1, Vin, which is a voltage of the input terminal of the balancing circuit 830 is lowered. Thus, a potential difference between a discharge voltage VDIS (or a charger output voltage VCHG) input to the system 820 and Vin decreases from a third potential difference D3 to a fourth potential difference D4. In the balancing circuit 830, as a potential difference between the discharge voltage VDIS (or the charger output voltage VCHG) input to the system 820 and Vin, which is a voltage of the input terminal of the balancing circuit 830 decreases, when the first battery 721 and the second battery 722 are discharged, a first discharge current I1 discharged from the first battery 721 may decrease. When the first discharge current I1 decreases in the fourth period T4, the voltage V1 of the first battery 721 and the voltage V2 of the second battery 722 are equally adjusted again. Thus, cell balancing may be implemented.

While the disclosure has been shown and described with reference to various embodiments thereof, it will be understood by those skilled in the art that various changes in form and details may be made therein without departing from the spirit and scope of the disclosure as defined by the appended claims and their equivalents.

**Claims**

1.    An electronic device (101, 300) comprising:

a first battery (721);
a second battery (722) connected in parallel with the first battery (721), wherein the first battery (721) and the second battery (722) are branched at a first node;
a charger (712) configured to charge the first battery (721) and the second battery (722) using power input from an external device;
a voltage detection circuit (840) configured to detect a voltage of the first battery (721) and a voltage of the second battery (722) while the first battery (721) and the second battery (722) are being charged; and
a balancing circuit (830) disposed between the first node and the first battery (721) and configured to control a connection between the first node and the first battery (721) in a pulse width modulation, PWM, method based on detecting a difference between the voltage of the first battery (721) and the voltage of the second battery (722), wherein the balancing circuit (830) comprises:
a first transistor (911) and second transistor (912) connected in series between the first node and a ground; and
an inductor (913) branched from a second node disposed between the first transistor (911) and the second transistor (912), wherein one end of the inductor (913) is connected to the second node, and the other end of the inductor (913) is connected to the first battery (721).

2.    The electronic device (101, 300) of claim 1, wherein the balancing circuit (830) further comprises a control signal generator (920) configured to generate a first control signal for controlling the first transistor (911) and a second control signal for controlling the second transistor (912) based on the voltage of the first battery (721) and the voltage of the second battery (722).

3.    The electronic device (101, 300) of claim 2, wherein the balancing circuit (830) is configured to control the first transistor (911) to continuously turn on and the second transistor (912) to continuously turn off when the voltage of the first battery (721) and the voltage of the second battery (722) are the same while the first battery (721) and the second battery (722) are being charged.

4. The electronic device (101, 300) of claim 2, wherein the balancing circuit (830) is configured to control the first transistor (911) to switch based on a designated duty cycle smaller than 100% and the second transistor (912) to switch opposite to the first transistor (911) when the voltage of the first battery (721) is higher than that of the second battery (722) while the first battery (721) and the second battery (722) are being charged.

5. The electronic device (101, 300) of claim 4,

   wherein the second battery (722) is connected to the charger (712) through a flexible printed circuit board, FPCB, (731), and
   wherein the first battery (721) is connected to the charger (712) without going through the FPCB (731).

6. The electronic device (101, 300) of claim 5,

   wherein, while the first transistor (911) switches based on a designated duty cycle smaller than 100% and the second transistor (912) switches opposite to the first transistor (911), a first charge current supplied to the first battery (721) is defined as in the following equation, $I_1 = \frac{(V_{CHG} - M \cdot V_1)}{R_1} \cdot M$ , and a second charge current supplied to the second battery (722) is defined as in the following equation, $I_2 = \frac{(V_{CHG} - V_2)}{R_2 + R_e}$ ,

   wherein, in the above equation, $I_1$ is a first charge current, $V_{CHG}$ is an output voltage of the charger (712), M is a value corresponding to a reciprocal of a duty cycle, $V_1$ is a voltage of the first battery (721), and $R_1$ is a resistor between the first node and the balancing circuit (830), and
   wherein, in the above equation, $I_2$ is a second charging current, $V_2$ is a voltage of the second battery (722), Re is a resistor of the FPCB (731), and $R_2$ is a resistor between the FPCB (731) and the second battery (722).

7. The electronic device (101, 300) of claim 2, wherein the balancing circuit (830) is configured to control the first transistor (911) to continuously turn on and the second transistor (912) to continuously turn off when the voltage of the first battery (721) and the voltage of the second battery (722) are the same while the first battery (721) and the second battery (722) are being discharged.

8. The electronic device (101, 300) of claim 2, wherein the balancing circuit (830) is configured to control the first transistor (911) to switch based on a designated duty cycle smaller than 100% and the second transistor (912) to continuously turn off when the voltage of the first battery (721) is lower than that of the second battery (722) while the first battery (721) and the second battery (722) are being discharged.

9. The electronic device (101, 300) of claim 8,

   wherein the second battery (722) is connected to the charger (712) through a flexible printed circuit board, FPCB, (731), and
   wherein the first battery (721) is directly connected to the charger (712).

10. The electronic device (101, 300) of claim 9,

    wherein, while the first transistor (911) switches based on a designated duty cycle smaller than 100%, and the second transistor (912) is continuously turned off, a first discharge current discharged from the first battery (721) is defined as in the following equation, $I_1 = \frac{(M \cdot V_1 - V_{DIS})}{R_1}$ , and a second discharge current discharged from the second battery (722) is defined by the following equation, $I_2 = \frac{(V_2 - V_{DIS})}{R_1 + Re}$ ,

    wherein, in the above equation, $I_1$ is a first discharge current, $V_{DIS}$ is a voltage of an output terminal of the charger (712), M is a value corresponding to a function of a duty cycle, $V_1$ is a voltage of the first battery (721), and $R_1$ is a resistor between the first node and the balancing circuit (830), and
    wherein, in the above equation, $I_2$ is a second discharge current, $V_2$ is a voltage of the second battery (722), Re is a resistor of the FPCB (731), and $R_2$ is a resistor between the FPCB (731) and the second battery (722).

11. The electronic device (101, 300) of claim 1, further comprising a first housing (310) and a second housing (320) rotatably coupled to each other using a hinge module,

wherein the charger (712) and the first battery (721) are disposed in the first housing (310), and
wherein the second battery (722) is disposed in the second housing (320).

12. The electronic device (101, 300) of claim 11, wherein the second battery (722) is connected to the charger (712) by a flexible printed circuit board, FPCB, (731) disposed to cross the hinge module between the first housing (310) and the second housing (320).

13. A method of charging a first battery (721) and a second battery (722) by an electronic device (101, 300) according to any one of preceding claims, the method comprising:

detecting a voltage of the first battery (721) and a voltage of the second battery (722) through a voltage detection circuit (840) while the first battery (721) and the second battery (722) are being charged;
controlling a connection between a first node and the first battery (721) in a pulse width modulation, PWM, method based on that a balancing circuit (830) disposed between the first battery (721) and a first node in which the connection between the first battery (721) and the second battery (722) is branched detects a difference between the voltage of the first battery (721) and the voltage of the second battery (722);
connecting a first transistor (911) and a second transistor (912) of the balancing circuit (830) in series between the first node and a ground; and
branching an inductor (913) of the balancing circuit (830) from a second node disposed between the first transistor (911) and the second transistor (912), wherein one end of the inductor (913) is connected to the second node and the other end of the inductor (913) is connected to the first battery (721).


**Patentansprüche**

1. Elektronische Vorrichtung (101, 300), umfassend:

eine erste Batterie (721);
eine zweite Batterie (722), die parallel zur ersten Batterie (721) geschaltet ist, wobei die erste Batterie (721) und die zweite Batterie (722) an einem ersten Knotenpunkt verzweigt sind;
ein Ladegerät (712), das zum Laden der ersten Batterie (721) und der zweiten Batterie (722) unter Verwendung von Eingangsleistung von einer externen Vorrichtung ausgestaltet ist;
eine Spannungserfassungsschaltung (840), die dazu ausgestaltet ist, eine Spannung der ersten Batterie (721) und eine Spannung der zweiten Batterie (722) zu erfassen, während die erste Batterie (721) und die zweite Batterie (722) geladen werden; und
eine Ausgleichsschaltung (830), die zwischen dem ersten Knotenpunkt und der ersten Batterie (721) angeordnet und dazu ausgestaltet ist, eine Verbindung zwischen dem ersten Knotenpunkt und der ersten Batterie (721) in einem Pulsweitenmodulationsverfahren, PWM, auf der Grundlage der Erfassung einer Differenz zwischen der Spannung der ersten Batterie (721) und der Spannung der zweiten Batterie (722) zu steuern, wobei die Ausgleichsschaltung (830) umfasst:

einen ersten Transistor (911) und einen zweiten Transistor (912), die in Reihe zwischen dem ersten Knotenpunkt und einer Masse geschaltet sind; und
einen Induktor (913), der von einem zweiten Knotenpunkt abzweigt, der zwischen dem ersten Transistor (911) und dem zweiten Transistor (912) angeordnet ist, wobei ein Ende des Induktors (913) mit dem zweiten Knotenpunkt verbunden ist und das andere Ende des Induktors (913) mit der ersten Batterie (721) verbunden ist.

2. Elektronische Vorrichtung (101, 300) nach Anspruch 1, wobei die Ausgleichsschaltung (830) ferner einen Steuersignalgenerator (920) umfasst, der dazu ausgestaltet ist, ein erstes Steuersignal zum Steuern des ersten Transistors (911) und ein zweites Steuersignal zum Steuern des zweiten Transistors (912) auf der Grundlage der Spannung der ersten Batterie (721) und der Spannung der zweiten Batterie (722) zu erzeugen.

3. Elektronische Vorrichtung (101, 300) nach Anspruch 2, wobei die Ausgleichsschaltung (830) dazu ausgestaltet ist, so zu steuern, dass der erste Transistor (911) kontinuierlich eingeschaltet und der zweite Transistor (912) kontinuierlich ausgeschaltet ist, wenn die Spannung der ersten Batterie (721) und die Spannung der zweiten Batterie (722) gleich sind, während die erste Batterie (721) und die zweite Batterie (722) geladen werden.

4. Elektronische Vorrichtung (101, 300) nach Anspruch 2, wobei die Ausgleichsschaltung (830) dazu ausgestaltet ist, so zu steuern, dass der erste Transistor (911) auf der Grundlage eines festgelegten Tastverhältnisses von weniger als 100 % schaltet und der zweite Transistor (912) entgegengesetzt zum ersten Transistor (911) schaltet, wenn die Spannung der ersten Batterie (721) höher ist als die der zweiten Batterie (722), während die erste Batterie (721) und die zweite Batterie (722) geladen werden.

5. Elektronische Vorrichtung (101, 300) nach Anspruch 4,

wobei die zweite Batterie (722) über eine flexible gedruckte Leiterplatte, *flexible printed circuit board* - FPCB, (731) mit dem Ladegerät (712) verbunden ist, und
wobei die erste Batterie (721) mit dem Ladegerät (712) verbunden ist, ohne die FPCB (731) zu durchlaufen.

6. Elektronische Vorrichtung (101, 300) nach Anspruch 5,

wobei, während der erste Transistor (911) auf der Grundlage eines festgelegten Tastverhältnisses von weniger als 100 % schaltet und der zweite Transistor (912) entgegengesetzt zum ersten Transistor (911) schaltet, ein erster Ladestrom, der der ersten Batterie (721) zugeführt wird, definiert ist wie in der folgenden Gleichung

$I_1 = \frac{(V_{CHG} - M \cdot V_1)}{R_1} \cdot M$, und ein zweiter Ladestrom, der der zweiten Batterie (722) zugeführt wird, definiert ist wie in der folgenden Gleichung, $I_2 = \frac{(V_{CHG} - V_2)}{R_2 + R_e}$,

wobei in der obigen Gleichung $I_1$ ein erster Ladestrom ist, $V_{CHG}$ eine Ausgangsspannung des Ladegeräts (712) ist, M ein Wert ist, der dem Kehrwert eines Tastverhältnisses entspricht, $V_1$ eine Spannung der ersten Batterie (721) ist und $R_1$ ein Widerstand zwischen dem ersten Knoten und der Ausgleichsschaltung (830) ist, und wobei in der obigen Gleichung $I_2$ ein zweiter Ladestrom ist, $V_2$ eine Spannung der zweiten Batterie (722) ist, Re ein Widerstand der FPCB (731) ist und $R_2$ ein Widerstand zwischen der FPCB (731) und der zweiten Batterie (722) ist.

7. Elektronische Vorrichtung (101, 300) nach Anspruch 2, wobei die Ausgleichsschaltung (830) dazu ausgestaltet ist, so zu steuern, dass der erste Transistor (911) kontinuierlich eingeschaltet und der zweite Transistor (912) kontinuierlich ausgeschaltet ist, wenn die Spannung der ersten Batterie (721) und die Spannung der zweiten Batterie (722) gleich sind, während die erste Batterie (721) und die zweite Batterie (722) entladen werden.

8. Elektronische Vorrichtung (101, 300) nach Anspruch 2, wobei die Ausgleichsschaltung (830) dazu ausgestaltet ist, so zu steuern, dass der erste Transistor (911) auf der Grundlage eines festgelegten Tastverhältnisses von weniger als 100 % schaltet und der zweite Transistor (912) kontinuierlich ausgeschaltet ist, wenn die Spannung der ersten Batterie (721) niedriger ist als die der zweiten Batterie (722), während die erste Batterie (721) und die zweite Batterie (722) entladen werden.

9. Elektronische Vorrichtung (101, 300) nach Anspruch 8,

wobei die zweite Batterie (722) über eine flexible gedruckte Leiterplatte, *flexible printed circuit board* - FPCB, (731) mit dem Ladegerät (712) verbunden ist, und
wobei die erste Batterie (721) direkt mit dem Ladegerät (712) verbunden ist.

10. Elektronische Vorrichtung (101, 300) nach Anspruch 9,

wobei, während der erste Transistor (911) auf der Grundlage eines festgelegten Tastverhältnisses von weniger als 100 % schaltet und der zweite Transistor (912) kontinuierlich ausgeschaltet ist, ein erster Entladestrom, der aus der ersten Batterie (721) entladen wird, definiert ist durch die folgende Gleichung, $I_1 = \frac{(M \cdot V_1 - V_{DIS})}{R_1}$, und ein zweiter Entladestrom, der aus der zweiten Batterie (722) entladen wird, definiert ist durch die folgende Gleichung,

$$I_2 = \frac{(V_2 - V_{DIS})}{R_1 + Re} \ ,$$

wobei in der obigen Gleichung $I_1$ ein erster Entladestrom ist, $V_{DIS}$ eine Spannung eines Ausgangsanschlusses des Ladegeräts (712) ist, M ein Wert ist, der einer Funktion eines Tastverhältnisses entspricht, $V_1$ eine Spannung der ersten Batterie (721) ist und $R_1$ ein Widerstand zwischen dem ersten Knotenpunkt und der Ausgleichsschaltung (830) ist, und wobei in der obigen Gleichung $I_2$ ein zweiter Entladestrom ist, $V_2$ eine Spannung der zweiten Batterie (722) ist, Re ein Widerstand der FPCB (731) ist und $R_2$ ein Widerstand zwischen der FPCB (731) und der zweiten Batterie (722) ist.

11. Elektronische Vorrichtung (101, 300) nach Anspruch 1, ferner umfassend ein erstes Gehäuse (310) und ein zweites Gehäuse (320), die mittels eines Scharniermoduls drehbar miteinander gekoppelt sind,
wobei das Ladegerät (712) und die erste Batterie (721) in dem ersten Gehäuse (310) angeordnet sind und wobei die zweite Batterie (722) in dem zweiten Gehäuse (320) angeordnet ist.

12. Elektronische Vorrichtung (101, 300) nach Anspruch 11, wobei die zweite Batterie (722) mit dem Ladegerät (712) über eine flexible gedruckte Leiterplatte, *flexible printed circuit board* - FPCB (731), verbunden ist, die so angeordnet ist, dass sie das Scharniermodul zwischen dem ersten Gehäuse (310) und dem zweiten Gehäuse (320) kreuzt.

13. Verfahren zum Laden einer ersten Batterie (721) und einer zweiten Batterie (722) durch eine elektronische Vorrichtung (101, 300) nach einem der vorangehenden Ansprüche, wobei das Verfahren umfasst:

Erfassen einer Spannung der ersten Batterie (721) und einer Spannung der zweiten Batterie (722) über eine Spannungserfassungsschaltung (840), während die erste Batterie (721) und die zweite Batterie (722) geladen werden;
Steuern einer Verbindung zwischen einem ersten Knotenpunkt und der ersten Batterie (721) in einem Pulsweitenmodulationsverfahren, *pulse width modulation* - PWM, auf der Grundlage davon, dass eine zwischen der ersten Batterie (721) und einem ersten Knotenpunkt, in dem die Verbindung zwischen der ersten Batterie (721) und der zweiten Batterie (722) verzweigt ist, angeordnete Ausgleichsschaltung (830) eine Differenz zwischen der Spannung der ersten Batterie (721) und der Spannung der zweiten Batterie (722) erfasst;
Schalten eines ersten Transistors (911) und eines zweiten Transistors (912) der Ausgleichsschaltung (830) in Reihe zwischen dem ersten Knotenpunkt und einer Masse; und
Verzweigen eines Induktors (913) der Ausgleichsschaltung (830) von einem zweiten Knotenpunkt, der zwischen dem ersten Transistor (911) und dem zweiten Transistor (912) angeordnet ist, wobei ein Ende des Induktors (913) mit dem zweiten Knotenpunkt verbunden ist und das andere Ende des Induktors (913) mit der ersten Batterie (721) verbunden ist.

**Revendications**

1. Dispositif électronique (101, 300) comprenant :

une première batterie (721) ;
une deuxième batterie (722) connectée en parallèle avec la première batterie (721), la première batterie (721) et la deuxième batterie (722) étant dérivées au niveau d'un premier nœud;
un chargeur (712) configuré pour charger la première batterie (721) et la deuxième batterie (722) à l'aide d'une alimentation provenant d'un dispositif externe ;
un circuit de détection de tension (840) configuré pour détecter une tension de la première batterie (721) et une tension de la deuxième batterie (722) alors que la première batterie (721) et la deuxième batterie (722) sont en cours de charge ; et
un circuit d'équilibrage (830) disposé entre le premier nœud et la première batterie (721) et configuré pour commander une connexion entre le premier nœud et la première batterie (721) selon un procédé de modulation de largeur d'impulsion, *pulse width modulation* - PWM, basé sur la détection d'une différence entre la tension de la première batterie (721) et la tension de la deuxième batterie (722),
dans lequel le circuit d'équilibrage (830) comprend :

un premier transistor (911) et un deuxième transistor (912) connectés en série entre le premier nœud et une masse ; et

un inducteur (913) dérivé d'un deuxième nœud disposé entre le premier transistor (911) et le deuxième transistor (912), une extrémité de l'inducteur (913) étant connectée au deuxième nœud, et l'autre extrémité de l'inducteur (913) étant connectée à la première batterie (721).

2. Dispositif électronique (101, 300) selon la revendication 1, dans lequel le circuit d'équilibrage (830) comprend en outre un générateur de signaux de commande (920) configuré pour générer un premier signal de commande pour commander le premier transistor (911) et un deuxième signal de commande pour commander le deuxième transistor (912) sur la base de la tension de la première batterie (721) et de la tension de la deuxième batterie (722).

3. Dispositif électronique (101, 300) selon la revendication 2, dans lequel le circuit d'équilibrage (830) est configuré pour commander le premier transistor (911) pour s'allumer continuellement et le deuxième transistor (912) pour s'éteindre continuellement lorsque la tension de la première batterie (721) et la tension de la deuxième batterie (722) sont identiques alors que la première batterie (721) et la deuxième batterie (722) sont en cours de charge.

4. Dispositif électronique (101, 300) selon la revendication 2, dans lequel le circuit d'équilibrage (830) est configuré pour commander le premier transistor (911) pour commuter sur la base d'un rapport cyclique désigné inférieur à 100 % et le deuxième transistor (912) pour commuter à l'opposé du premier transistor (911) lorsque la tension de la première batterie (721) est supérieure à celle de la deuxième batterie (722) alors que la première batterie (721) et la deuxième batterie (722) sont en cours de charge.

5. Dispositif électronique (101, 300) selon la revendication 4,

   dans lequel la deuxième batterie (722) est connectée au chargeur (712) par l'intermédiaire d'une carte de circuit imprimé flexible, *flexible printed circuit board* - FPCB, (731), et
   dans lequel la première batterie (721) est connectée au chargeur (712) sans passer par la FPCB (731).

6. Dispositif électronique (101, 300) selon la revendication 5,

   dans lequel, alors que le premier transistor (911) commute sur la base d'un rapport cyclique désigné inférieur à 100 % et que le deuxième transistor (912) commute à l'opposé du premier transistor (911), un premier courant de

   $$I_1 = \frac{(V_{CHG} - M \cdot V_1)}{R_1} \cdot M$$

   charge fourni à la première batterie (721) est défini comme dans l'équation suivante, , et

   un deuxième courant de charge fourni à la deuxième batterie (722) est défini comme dans l'équation suivante,

   $$I_2 = \frac{(V_{CHG} - V_2)}{R_2 + R_e}$$

   dans l'équation ci-dessus, $I_1$ étant un premier courant de charge, $V_{CHG}$ étant une tension de sortie du chargeur (712), M étant une valeur correspondant à une réciproque d'un rapport cyclique, $V_1$ étant une tension de la première batterie (721), et $R_1$ étant une résistance entre le premier nœud et le circuit d'équilibrage (830), et dans l'équation ci-dessus, $I_2$ étant un deuxième courant de charge, $V_2$ étant une tension de la deuxième batterie (722), Re étant une résistance de la FPCB (731), et $R_2$ étant une résistance entre la FPCB (731) et la deuxième batterie (722).

7. Dispositif électronique (101, 300) selon la revendication 2, dans lequel le circuit d'équilibrage (830) est configuré pour commander le premier transistor (911) pour s'allumer continuellement et le deuxième transistor (912) pour s'éteindre continuellement lorsque la tension de la première batterie (721) et la tension de la deuxième batterie (722) sont identiques alors que la première batterie (721) et la deuxième batterie (722) sont en cours de décharge.

8. Dispositif électronique (101, 300) selon la revendication 2, dans lequel le circuit d'équilibrage (830) est configuré pour commander le premier transistor (911) pour commuter sur la base d'un rapport cyclique désigné inférieur à 100 % et le deuxième transistor (912) pour s'éteindre continuellement lorsque la tension de la première batterie (721) est inférieure à celle de la deuxième batterie (722) alors que la première batterie (721) et la deuxième batterie (722) sont en cours de décharge.

9. Dispositif électronique (101, 300) selon la revendication 8,

dans lequel la deuxième batterie (722) est connectée au chargeur (712) par l'intermédiaire d'une carte de circuit imprimé flexible, *flexible printed circuit board* - FPCB, (731), et
dans lequel la première batterie (721) est directement connectée au chargeur (712).

10. Dispositif électronique (101, 300) selon la revendication 9,

dans lequel, alors que le premier transistor (911) commute sur la base d'un rapport cyclique désigné inférieur à 100 %, et que le deuxième transistor (912) est continuellement éteint, un premier courant de décharge déchargé de la première batterie (721) est défini comme dans l'équation suivante, $I_1 = \frac{(M \cdot V_1 - V_{DIS})}{R_1}$ , et un deuxième courant de décharge déchargé de la deuxième batterie (722) est défini par l'équation suivante,

$$I_2 = \frac{(V_2 - V_{DIS})}{R_1 + Re} ,$$

dans l'équation ci-dessus, $I_1$ étant un premier courant de décharge, $V_{DIS}$ étant une tension d'une borne de sortie du chargeur (712), M étant une valeur correspondant à une fonction d'un rapport cyclique, $V_1$ étant une tension de la première batterie (721), et $R_1$ étant une résistance entre le premier nœud et le circuit d'équilibrage (830), et
dans l'équation ci-dessus, $I_2$ étant un deuxième courant de décharge, $V_2$ étant une tension de la deuxième batterie (722), Re étant une résistance de la FPCB (731), et $R_2$ étant une résistance entre la FPCB (731) et la deuxième batterie (722).

11. Dispositif électronique (101, 300) selon la revendication 1, comprenant en outre un premier boîtier (310) et un deuxième boîtier (320) couplés de manière rotative l'un à l'autre à l'aide d'un module de charnière,

dans lequel le chargeur (712) et la première batterie (721) sont disposés dans le premier boîtier (310), et
dans lequel la deuxième batterie (722) est disposée dans le deuxième boîtier (320).

12. Dispositif électronique (101, 300) selon la revendication 11, dans lequel la deuxième batterie (722) est connectée au chargeur (712) par une carte de circuit imprimé flexible, flexible *printed circuit board* - FPCB, (731) disposée pour traverser le module de charnière entre le premier boîtier (310) et le deuxième boîtier (320).

13. Procédé de charge d'une première batterie (721) et d'une deuxième batterie (722) par un dispositif électronique (101, 300) selon l'une quelconque des revendications précédentes, le procédé comprenant :

la détection d'une tension de la première batterie (721) et d'une tension de la deuxième batterie (722) par un circuit de détection de tension (840) alors que la première batterie (721) et la deuxième batterie (722) sont en cours de charge ;
la commande d'une connexion entre un premier nœud et la première batterie (721) dans un procédé de modulation de largeur d'impulsion, *pulse width modulation* - PWM, basé sur le fait qu'un circuit d'équilibrage (830) disposé entre la première batterie (721) et un premier nœud dans lequel la connexion entre la première batterie (721) et la deuxième batterie (722) est dérivée détecte une différence entre la tension de la première batterie (721) et la tension de la deuxième batterie (722) ;
la connexion d'un premier transistor (911) et d'un deuxième transistor (912) du circuit d'équilibrage (830) en série entre le premier nœud et une masse ; et
la dérivation d'un inducteur (913) du circuit d'équilibrage (830) à partir d'un deuxième nœud disposé entre le premier transistor (911) et le deuxième transistor (912), une extrémité de l'inducteur (913) étant connectée au deuxième nœud et l'autre extrémité de l'inducteur (913) étant connectée à la première batterie (721).

FIG. 1

# FIG. 2

200

| 188 | 189 |
|---|---|
| **Power management module** | **Battery** |

210 — Charging circuit

220 — Power regulator

230 — Power gauge

Battery PCM — 240

# FIG. 3

# FIG. 4

# FIG. 5

# FIG. 6

# FIG. 7

FIG. 8

FIG. 9

FIG. 10

712

Charger

$V_{CHG}$ →

n1

Re   731

$I_1 = \dfrac{(V_{CHG} - V_1)}{R_1}$ ↓ R1

R2   $I_2 = \dfrac{(V_{CHG} - V_2)}{R_2 + Re}$ ↓

V2

+

−

722

Vin=V1

Balancing circuit
(ideal transformer)
Vin/Vo=1

830

Vo=V1

+

−

721

FIG. 11A

712

Charger $V_{CHG}$

n1

Re  731

$I_{1X} = \dfrac{(V_{CHG} - M \cdot V_I)}{R_I}$  R1

$I_2 = \dfrac{(V_{CHG} - V_2)}{R_2 + Re}$  R2

Vin=M·V1

V2

For buck converter, M=1/D

Balancing circuit
(ideal transformer)
Vin/Vo=M

+

−

722

830

$I_I = \dfrac{(V_{CHG} - M \cdot V_I)}{R_I} \cdot M$

V1

+

−

721

FIG. 11B

# FIG. 12

# FIG. 13

FIG. 14A

FIG. 14B

# FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020266499 A1